# EUROPEAN PATENT APPLICATION

(11) **EP 4 606 805 A1**
(43) Date of publication of application: **27.08.2025**
(21) Application number: 24757037.7
(22) Date of filing: 15.01.2024
(51) Int. Cl.: C07F 7/00, C07F 7/28, B01J 31/22, B01J 31/14, C08F 4/64, C08F 4/659

(54) **TRANSITION METAL COMPOUND AND CATALYST COMPOSITION COMPRISING SAME**

(30) Priority: 17.02.2023 KR 20230021372
(71) Applicant: LG CHEM, LTD., Seoul 07336 (KR)
(72) Inventor: CHO, Seong Mi, Daejeon 34122 (KR); PARK, Geun Ho, Daejeon 34122 (KR); PARK, Cheol Woong, Daejeon 34122 (KR); CHO, Yoon Hee, Daejeon 34122 (KR); HAN, Ki Won, Daejeon 34122 (KR)
(74) Representative: Hoffmann Eitle
(86) International application number: PCT/KR2024/000700
(87) International publication number: WO 2024/172306

(57) **Abstract**

The present invention relates to a transition metal compound having a novel structure and a catalyst composition comprising the same.

## Description

### TECHNICAL FIELD

### Cross-reference to Related Applications

This application claims the benefit of Korean Patent Application No. 10-2023-0021372, filed on February 17, 2023, in the Korean Intellectual Property Office, the contents of which are incorporated herein by reference.

### Technical Field

The present invention relates to a transition metal compound having a novel structure and a catalyst composition comprising the same.

### BACKGROUND ART

Generally, olefin polymers such as an ethylene copolymer are useful polymer materials as the material for hollow molded product, an extrusion molded product, a film, a sheet or the like, and have been prepared in the presence of a Ziegler-Natta catalyst system.

The Ziegler-Natta catalyst is a heterogeneous catalyst and is a catalyst used in a system in which the phase of a reactant and the phase of a catalyst are not the same, for example, a system of liquid reactant-solid catalyst or the like. Such a Ziegler-Natta catalyst is composed of two components and is generally composed of a halogen compound of a transition metal including titanium (Ti), vanadium (V), chromium (Cr), molybdenum (Mo) and zirconium (Zr), (for example, TiCl₄), alkyllithium, alkylaluminum or the like.

However, the Ziegler-Natta catalyst has the concentration of active species of a few % to tens of % with respect to a transition metal atom, and most transition metal atoms may not demonstrate their function and have defects of not overcoming the limitations as a heterogeneous catalyst.

Recently, as a next generation catalyst which may overcome the defects, metallocene compounds have received the attention. The metallocene compounds are homogeneous catalysts including a metal in group 4 and are known to show desirable polymerization activity in olefin polymerization.

Most metallocene catalysts used for polymerization include a metal element in group 4 such as titanium, zirconium, and hafnium (Hf) and a supporting ligand, as a precursor, and are composed of two aromatic five-member rings and two halogen compounds which are leaving groups. Among them, an aromatic cyclopentadienyl group is generally used as the supporting ligand which is coordinated with respect to a central metal.

Such a metallocene catalyst is used in a variety of applications including an olefin polymerization process, but the catalyst activity showed some limitations (particularly in a solution process at temperature conditions of 100°C or higher), and it is known that, for example, due to relatively rapid terminal termination reaction (or chain transfer reaction) such as beta-hydride elimination reaction, an olefin polymer with a low molecular weight showing a molecular weight (Mn) of 20,000 or less at a temperature of 100°C or higher may be prepared. In addition, the active species of the metallocene catalyst is known to be deactivated at a temperature of 100°C or higher. Accordingly, in order to increase the applicability of the metallocene catalyst, methods for overcoming the above-mentioned limitations are necessary.

### DETAILED DESCRIPTION OF THE INVENTION

### TECHNICAL PROBLEM

An object of the present invention is to provide a novel transition metal compound which shows excellent copolymerization properties and is capable of preparing an olefin-based polymer, particularly, an olefin-based polymer having a high melting temperature and a high molecular weight, and a catalyst composition comprising the same.

### TECHNICAL SOLUTION

To solve the above tasks, the present invention provides a transition metal compound, a catalyst composition and a method for preparing an olefin polymer.
(1) The present invention provides a transition metal compound represented by Formula 1. 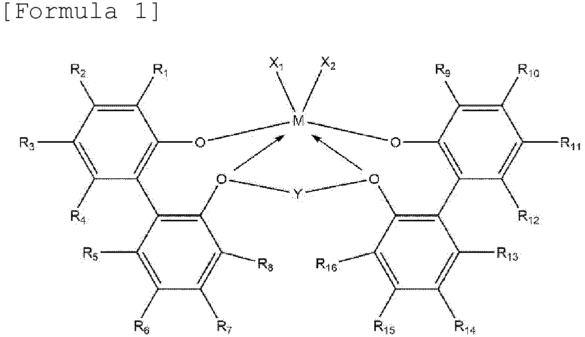 In Formula 1,
   M is Ti, Zr or Hf,
   R₁ and R₉ are represented by Formula 2 below,
   R₂ to R₈, and R₁₀ to R₁₆ are each independently hydrogen, F, Cl, CN, CF₃, an alkyl group of 1 to 20 carbon atoms, an alkylsilyl group of 1 to 20 carbon atoms, or an alkoxy group of 1 to 20 carbon atoms,
   Y is an alkylene group of 1 to 20 carbon atoms, an arylene group of 6 to 20 carbon atoms, or a heteroarylene group of 5 to 20 carbon atoms, and
   X₁ and X₂ are each independently an alkyl group of 1 to 20 carbon atoms, or an arylalkyl group of 7 to 20 carbon atoms, 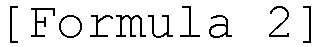 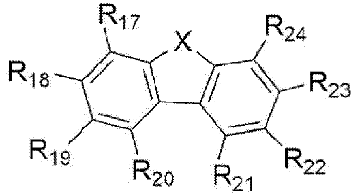
   in Formula 2,
   R₁₇ to R₂₄ are each independently hydrogen, F, Cl, CN, CF3, an alkyl group of 1 to 20 carbon atoms, an alkylsilyl group of 1 to 20 carbon atoms, or an alkoxy group of 1 to 20 carbon atoms,
   X is O, S, C(R₂₅R₂₆) or N(R₂₇), where R₂₅ to R₂₇ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms, or an arylalkyl group of 7 to 20 carbon atoms, and
   any one among R₁₇ to R₂₄ is a position connected with Formula 1.
(2) The present invention provides the transition metal compound according to (1), wherein, in Formula 1, M is Hf, R₂ to R₈, and R₁₀ to R₁₆ are each independently hydrogen, F, or an alkyl group of 1 to 20 carbon atoms, Y is an alkylene group of 1 to 10 carbon atoms, and X₁ and X₂ are each independently an alkyl group of 1 to 10 carbon atoms.
(3) The present invention provides the transition metal compound according to (1) or (2), wherein, in Formula 2, R₁₇ to R₂₄ are each independently hydrogen or an alkyl group of 1 to 10 carbon atoms, R₁₇ or R₂₀ is a position connected with Formula 1, X is O, S, C(R₂₅R₂₆) or N(R₂₇), where R₂₅ to R₂₇ are each independently an alkyl group of 1 to 10 carbon atoms or an aryl group of 6 to 10 carbon atoms.
(4) The present invention provides the transition metal compound according to any one of (1) to (3), wherein the transition metal compound represented by Formula 1 is one selected from the group consisting of Formula 1-1 to Formula 1-4.

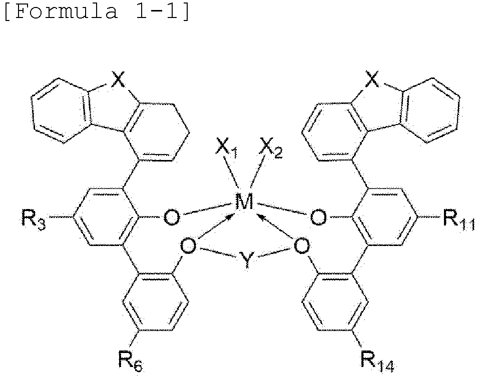

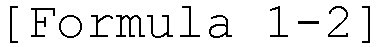

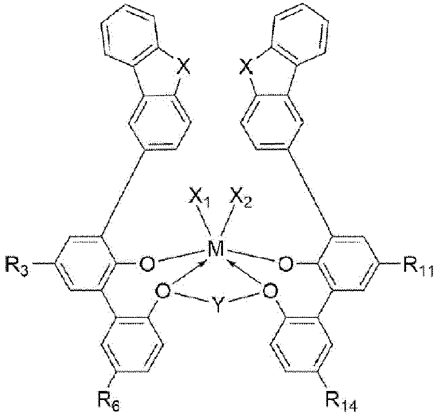

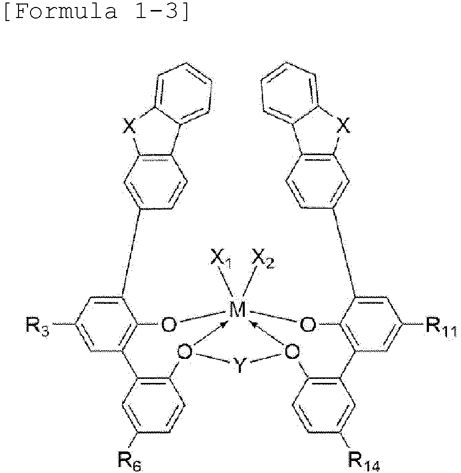

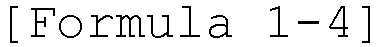

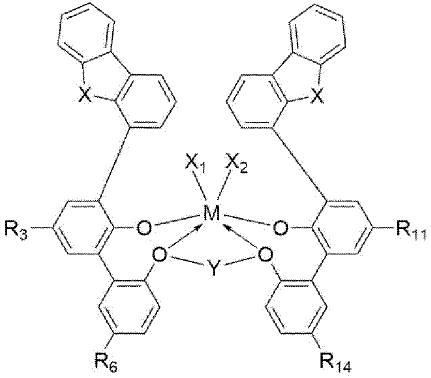

In Formula 1-1 to Formula 1-4,
M is Ti, Zr or Hf,
R₃, R₆, R₁₁ and R₁₄ are each independently F, Cl, CN, CF₃, an alkyl group of 1 to 20 carbon atoms, an alkylsilyl group of 1 to 20 carbon atoms, or an alkoxy group of 1 to 20 carbon atoms,
Y is an alkylene group of 1 to 20 carbon atoms, an arylene group of 6 to 20 carbon atoms, or a heteroarylene group of 5 to 20 carbon atoms,
X₁ and X₂ are each independently an alkyl group of 1 to 20 carbon atoms, or an arylalkyl group of 7 to 20 carbon atoms, and
X is O, S, C(R₂₅R₂₆) or N(R₂₇), where R₂₅ to R₂₇ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms, or an arylalkyl group of 7 to 20 carbon atoms.

(5) The present invention provides the transition metal compound according to any one of (1) to (4), wherein the transition metal compound represented by Formula 1 is one selected from the group consisting of the compounds below. 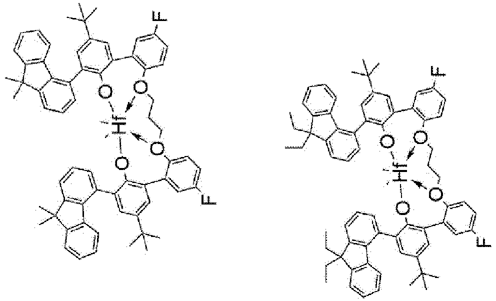 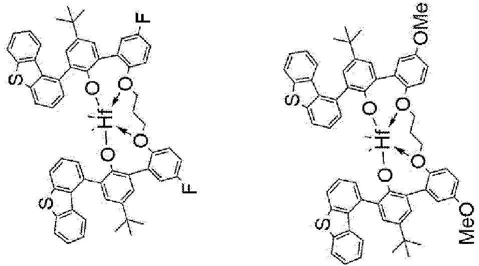 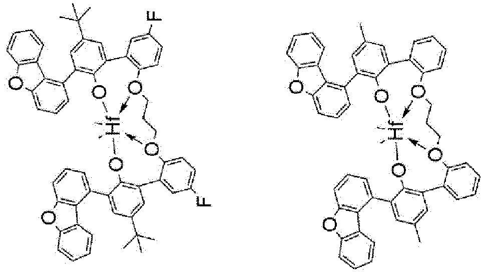 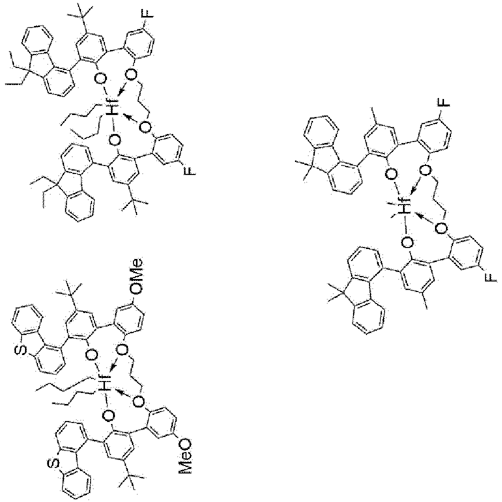 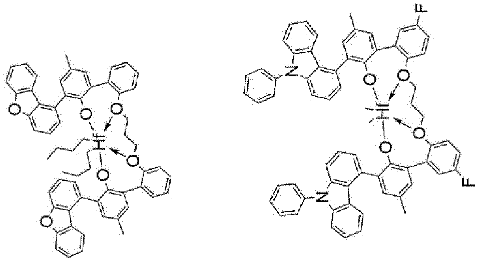 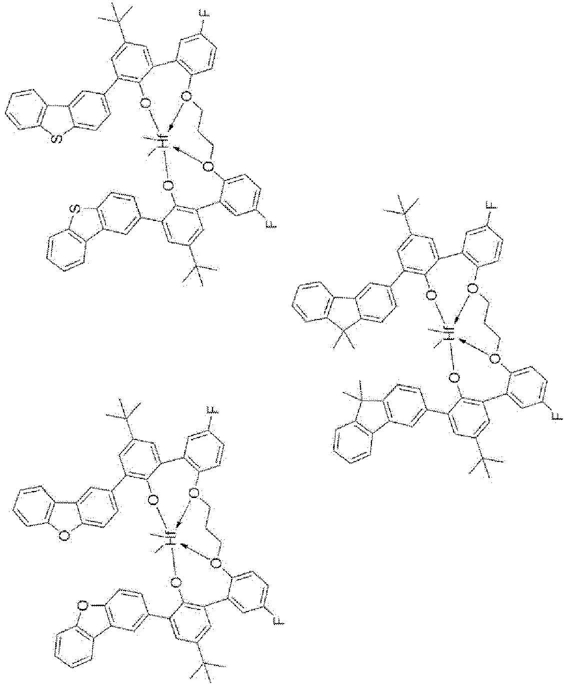 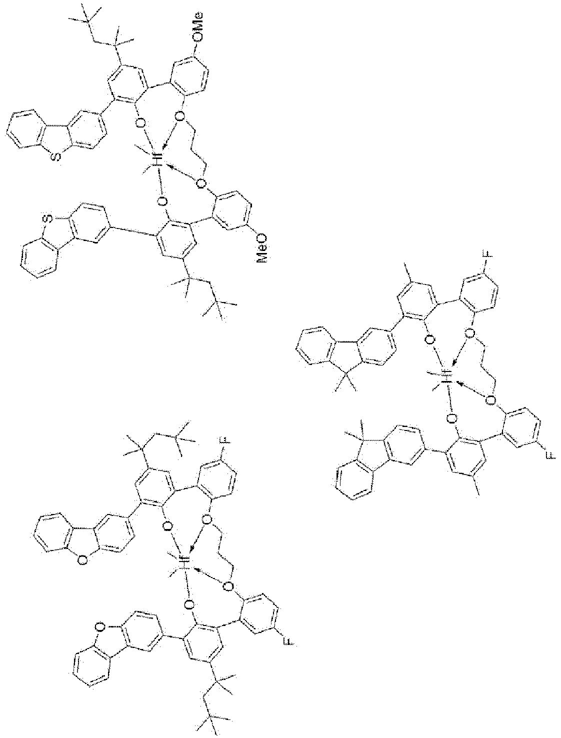 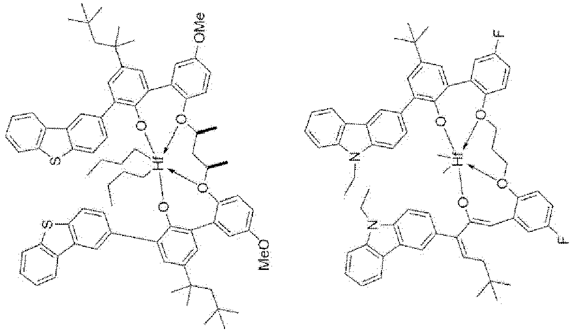 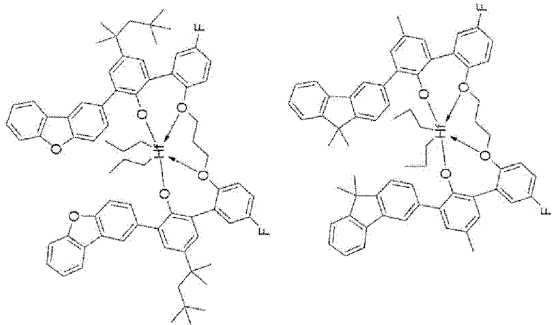 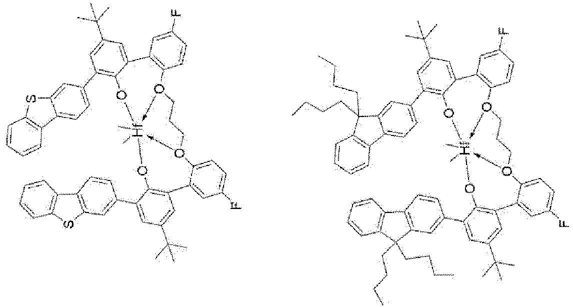 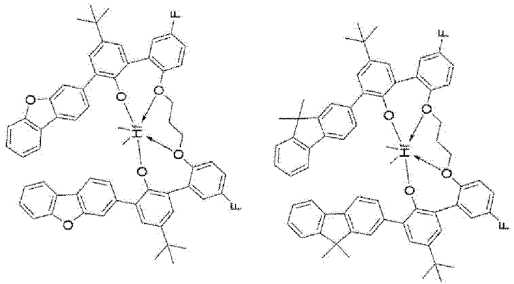 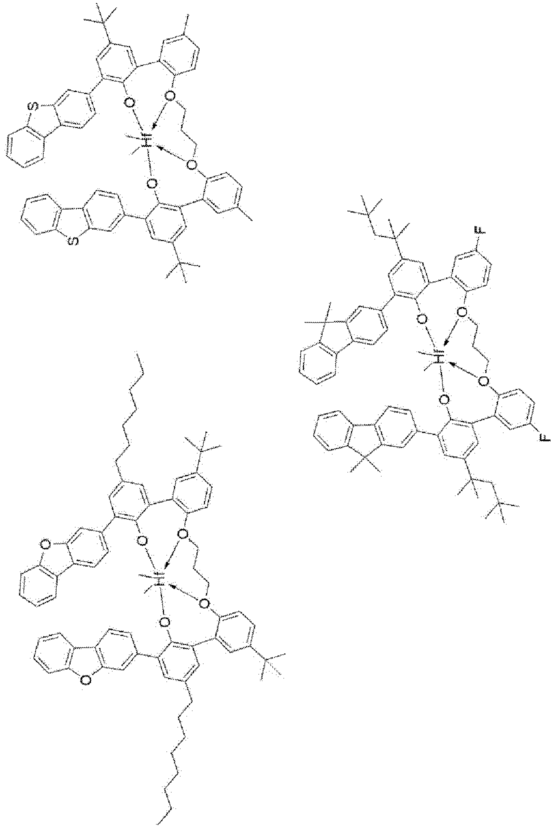 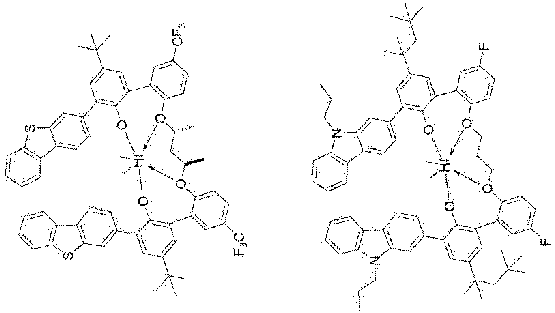 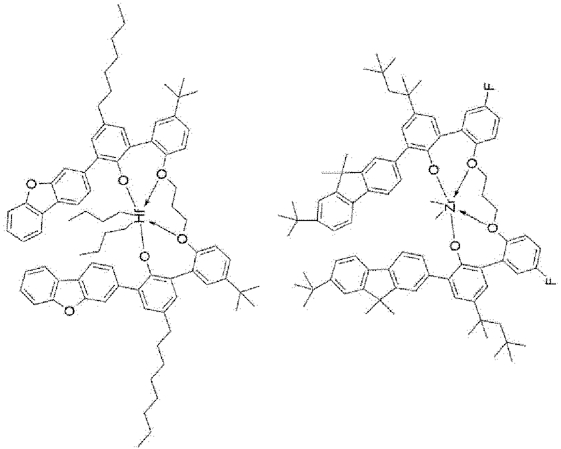 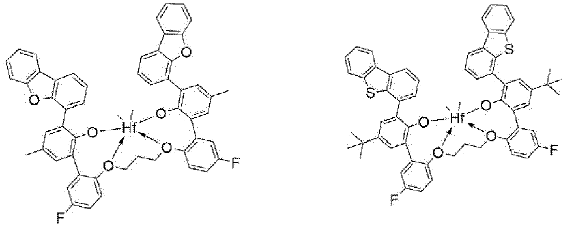 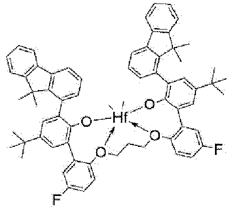 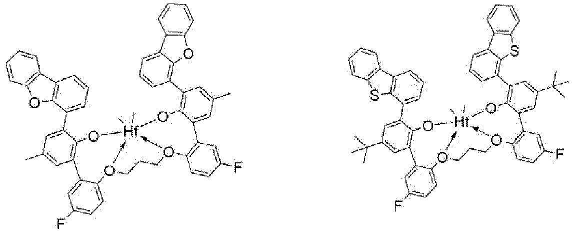 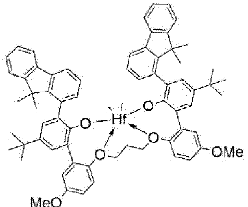 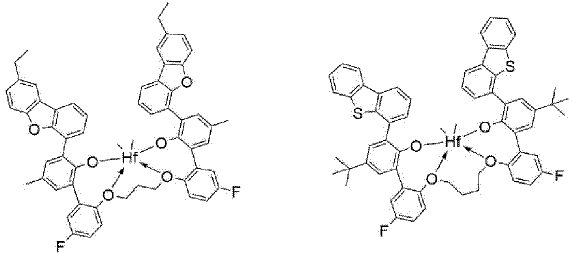 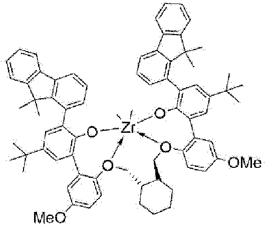 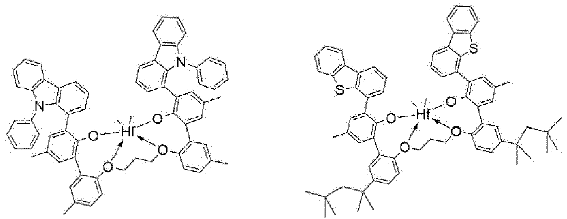 .

(6) The present invention provides a catalyst composition comprising the transition metal compound according to anyone of (1) to (5) and a cocatalyst.

(7) The present invention provides the catalyst composition according to (6), wherein the cocatalyst comprises one or more selected from Formula 3 to Formula 5 below.

[Formula 3] - [Al(Rₐ)-O]ₘ-

[Formula 4] D (Rₐ)₃

[Formula 5] [L-H]⁺[Z(A)₄]⁻ or [L]⁺[Z(A)₄]⁻

In the above Formulas,
each Rₐ is independently a halogen radical, a hydrocarbyl radical of 1 to 20 carbon atoms, or a halogen-substituted hydrocarbyl radical of 1 to 20 carbon atoms,
m is an integer of 2 or more,
D is aluminum or boron,
L is a neutral or cationic Lewis acid,
Z is an element in group 13,
each A is independently aryl of 6 to 20 carbon atoms, in which one or more hydrogen atoms can be substituted with substituents, or alkyl of 1 to 20 carbon atoms, and
the substituent of A is halogen, hydrocarbyl of 1 to 20 carbon atoms, alkoxy of 1 to 20 carbon atoms, or aryloxy of 6 to 20 carbon atoms.

(8) The present invention provides a method for preparing an olefin polymer, the method comprising a step of polymerizing an olefin monomer in the presence of the catalyst composition according to (6) or (7).

(9) The present invention provides the method for preparing an olefin polymer according to (8), wherein the olefin polymer is an ethylene/alpha-olefin copolymer.

### EFFECTS OF THE INVENTION

An olefin-based polymer having a high melting temperature and a high molecular weight may be easily prepared by using the transition metal compound according to the present invention as a catalyst.

### MODE FOR CARRYING OUT THE INVENTION

Hereinafter, the present invention will be described in more detail to assist the understanding of the present invention.

It will be understood that words or terms used in the present disclosure and claims shall not be interpreted as the meaning defined in commonly used dictionaries. It will be further understood that the words or terms should be interpreted as having a meaning that is consistent with their meaning in the technical idea of the invention, based on the principle that an inventor may properly define the meaning of the words or terms to best explain the invention.

The term used in the present description, "alkyl" means, unless otherwise referred to, linear, cyclic or branched hydrocarbon residue group, and includes methyl, ethyl, n-propyl, isopropyl, n-butyl, isobutyl, t-butyl, n-pentyl, isopentyl and hexyl, without limitation.

The term used in the present description, "cycloalkyl" refers to a non-aromatic cyclic hydrocarbon radical composed of carbon atoms, unless otherwise referred to. Non-limiting examples of the "cycloalkyl" include cyclopropyl, cyclobutyl, cyclopentyl, cyclohexyl and cycloheptyl.

The term used in the present description "aryl" refers to, unless otherwise referred to, an optionally substituted benzene ring, or a ring system formed by fusing one or more optional substituents. Examples of the optional substituent include substituted Cₗ₋₃ alkyl, substituted C₂₋₃ alkenyl, substituted C₂₋₃ alkynyl, heteroaryl, heterocyclic, aryl, alkoxy having optional one to three fluorine substituents, aryloxy, aralkoxy, acyl, aroyl, heteroaroyl, acyloxy, aroyloxy, heteroaroyloxy, sulfanyl, sulfinyl, sulfonyl, aminosulfonyl, sulfonylamino, carboxamide, aminocarbonyl, carboxyl, oxo, hydroxyl, mercapto, amino, nitro, cyano, halogen or ureido. The ring or the ring system may be optionally fused with an aryl ring (for example, benzene ring), carbon ring or heterocyclic ring, having optional one or more substituents. Non-limiting examples of the "aryl" group include phenyl, naphthyl, tetrahydronaphthyl, biphenyl, indanyl, anthracyl, phenanthryl, or substituted derivatives thereof.

In the present invention, "alkylaryl" means an aryl group substituted with the alkyl group.

In the present invention, "arylalkyl" means an alkyl group substituted with the aryl group.

In the prevent invention, a "hydrocarbyl" means a monovalent hydrocarbon group of 1 to 20 carbon atoms, composed of only carbon and hydrogen, irrespective of its structure, unless otherwise referred to, such as alkyl, aryl, alkenyl, alkynyl, cycloalkyl, alkylaryl and arylalkyl.

In the present invention, an "alkylene group" may mean a divalent aliphatic saturated hydrocarbon such as methylene, ethylene, propylene and butylene.

In the present invention, an "alkoxy group" may include all functional groups, atomic groups or compounds in which hydrogen at the terminal of an alkyl group is substituted with an oxygen atom, such as methoxy, ethoxy, propoxy and butoxy.

The transition metal compound of the present invention is characterized in being represented by Formula 1.

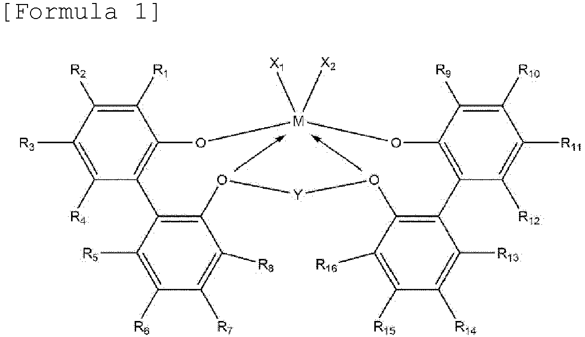

In Formula 1,
M is Ti, Zr or Hf,
R₁ and R₉ are represented by Formula 2 below,
R₂ to R₈, and R₁₀ to R₁₆ are each independently hydrogen, F, Cl, CN, CF₃, an alkyl group of 1 to 20 carbon atoms, an alkylsilyl group of 1 to 20 carbon atoms, or an alkoxy group of 1 to 20 carbon atoms,
Y is an alkylene group of 1 to 20 carbon atoms, an arylene group of 6 to 20 carbon atoms, or a heteroarylene group of 5 to 20 carbon atoms, and
X₁ and X₂ are each independently an alkyl group of 1 to 20 carbon atoms, or an arylalkyl group of 7 to 20 carbon atoms, 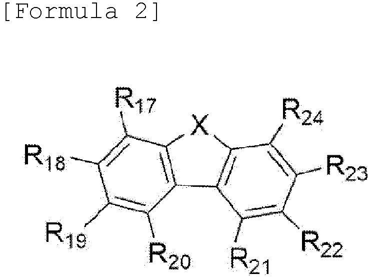
in Formula 2,
R₁₇ to R₂₄ are each independently hydrogen, F, Cl, CN, CF₃, an alkyl group of 1 to 20 carbon atoms, an alkylsilyl group of 1 to 20 carbon atoms, or an alkoxy group of 1 to 20 carbon atoms,
X is O, S, C (R₂₅R₂₆) or N(R₂₇), where R₂₅ to R₂₇ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms, or an arylalkyl group of 7 to 20 carbon atoms, and
any one among R₁₇ to R₂₄ is a position connected with Formula 1.

The transition metal compound of the present invention is a structure in which a fused ring of a specific structure is substituted at the ortho position of bisphenolate, and has steric hindrance and an electron density difference compared to the conventional compound, and accordingly, is advantageous in view of the activity of the transition metal compound and copolymerization properties with respect to a comonomer.

Due to the properties of the substituent, the transition metal compound of the present invention may prepare a polymer in a high density range, which has excellent activity compared to the conventional bisphenolate compound. This is an intrinsic characteristic achieved by the novel structure of the newly developed compound in the present invention.

Particularly, in Formula 1, M may be Hf.

Particularly, in Formula 1, R₂ to R₈, and R₁₀ to R₁₆ may be each independently hydrogen, F, or an alkyl group of 1 to 10 carbon atoms, an alkyl group of 1 to 6 carbon atoms, an alkyl group of 1 to 4 carbon atoms.

Particularly, in Formula 1, Y may be an alkylene group of 1 to 10 carbon atoms, an alkylene group of 1 to 6 carbon atoms, an alkylene group of 1 to 4 carbon atoms, for example, a propylene group.

Particularly, in Formula 1, X₁ and X₂ may be each independently an alkyl group of 1 to 10 carbon atoms, an alkyl group of 1 to 3 carbon atoms, for example, a methyl group.

Particularly, in Formula 2, R₁₇ or R₂₀ may be a position connected with Formula 1.

Particularly, in Formula 2, R₁₇ to R₂₄, excluding the position connected with Formula 1, may be each independently hydrogen or an alkyl group of 1 to 10 carbon atoms, for example, hydrogen.

Particularly, in Formula 2, X may be O, S, C(R₂₅R₂₆) or N(R₂₇), where R₂₅ to R₂₇ are each independently an alkyl group of 1 to 10 carbon atoms or an aryl group of 6 to 10 carbon atoms, R₂₅ and R₂₆ may be each independently an alkyl group of 1 to 6 carbon atoms, an alkyl group of 1 to 3 carbon atoms, for example, a methyl group, and R₂₇ may be an aryl group of 6 to 10 carbon atoms, for example, a phenyl group.

Particularly, the transition metal compound represented by Formula 1 may be a transition metal compound selected from the group consisting of Formula 1-1 to Formula 1-4 below.

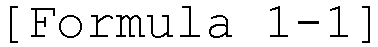

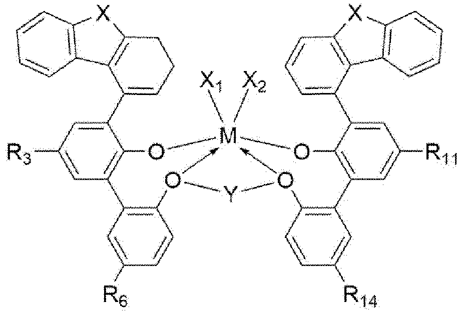

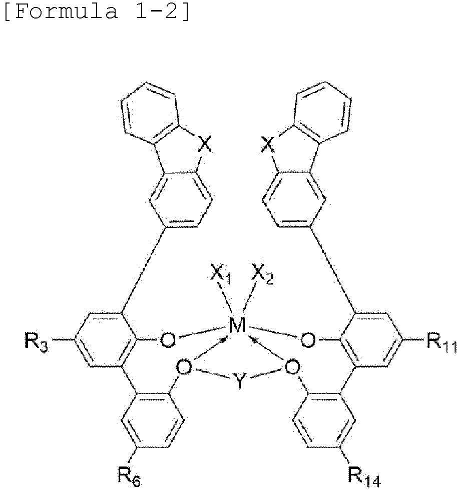

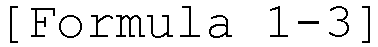

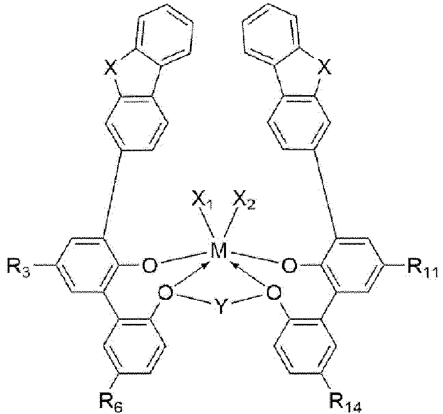

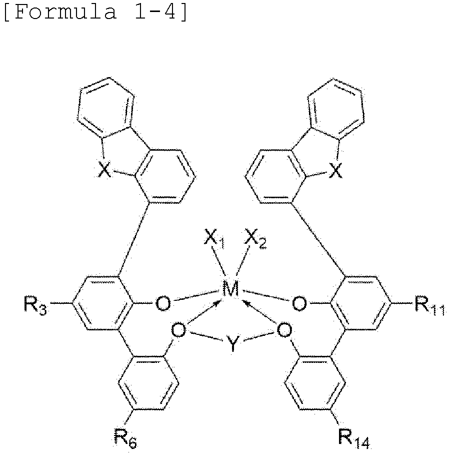

In Formula 1-1 to Formula 1-4,
M is Ti, Zr or Hf,
R₃, R₆, R₁₁ and R₁₄ are each independently F, Cl, CN, CF₃, an alkyl group of 1 to 20 carbon atoms, an alkylsilyl group of 1 to 20 carbon atoms, or an alkoxy group of 1 to 20 carbon atoms,
Y is an alkylene group of 1 to 10 carbon atoms, an arylene group of 6 to 20 carbon atoms, or a heteroarylene group of 5 to 20 carbon atoms,
X₁ and X₂ are each independently an alkyl group of 1 to 20 carbon atoms, or an arylalkyl group of 7 to 20 carbon atoms, and
X is O, S, C (R₂₅R₂₆) or N(R₂₇), where R₂₅ to R₂₇ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms, or an arylalkyl group of 7 to 20 carbon atoms.

The transition metal compound represented by Formula 1 may be one selected from the group consisting of the compounds below, but all transition metal compounds corresponding to Formula 1 may be included in the present invention, without limitation. 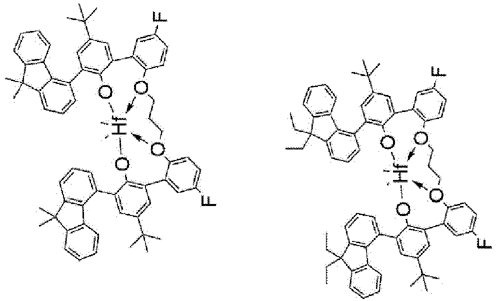 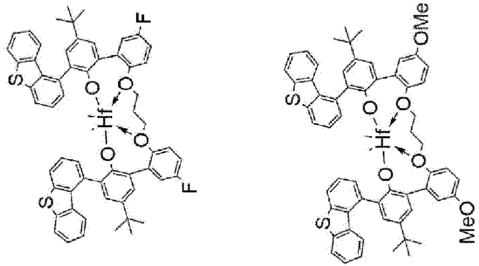 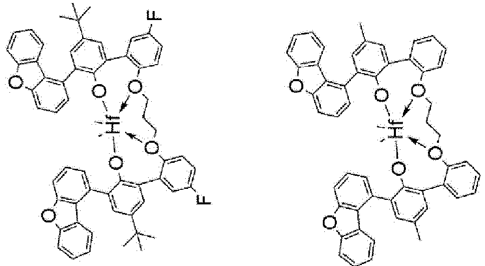 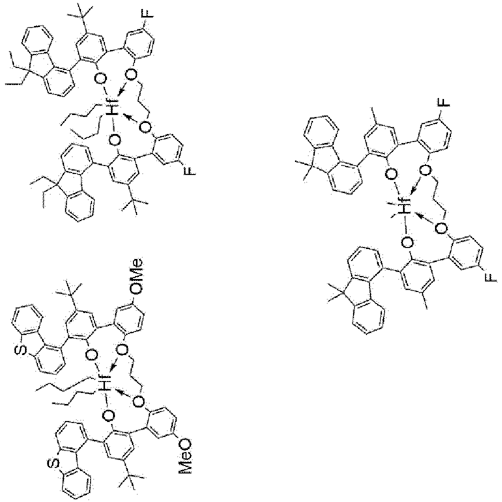 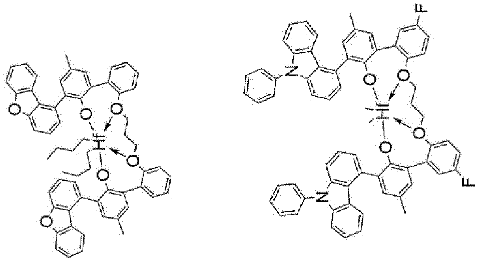 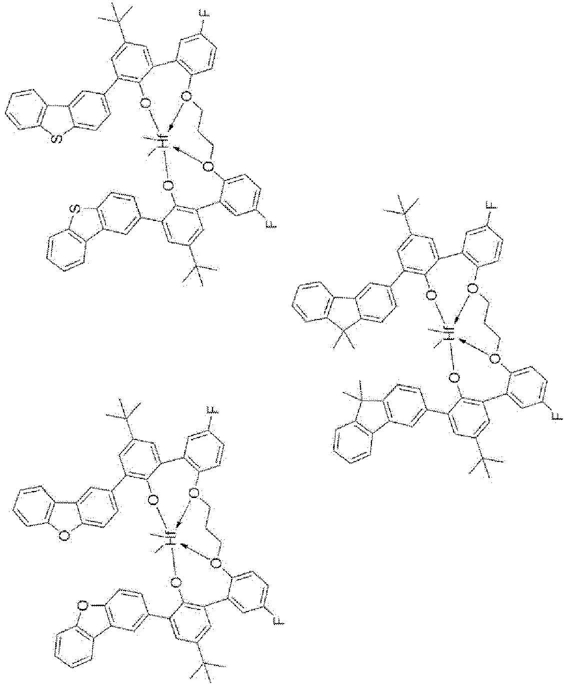 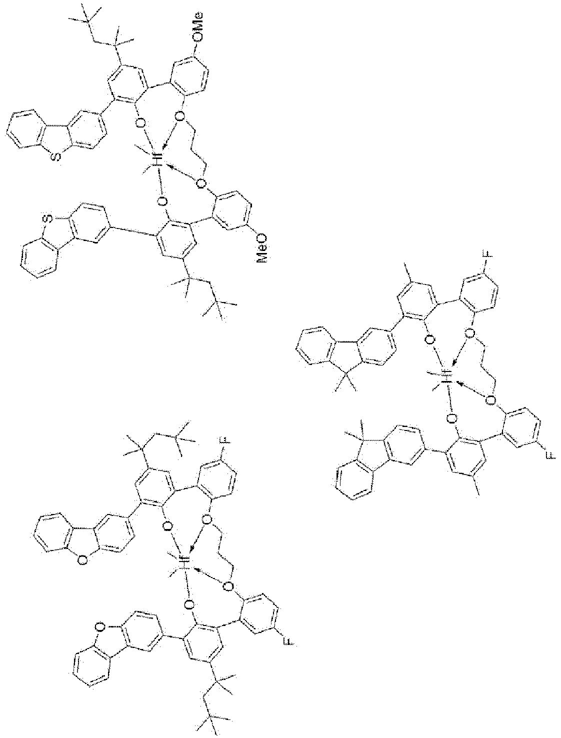 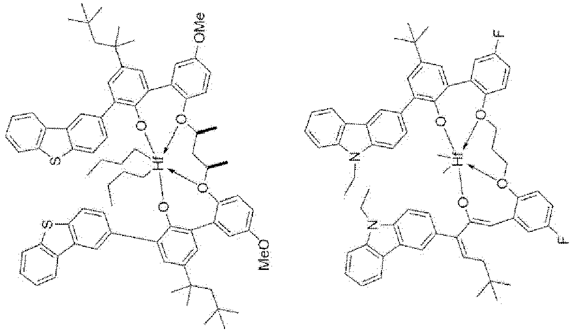 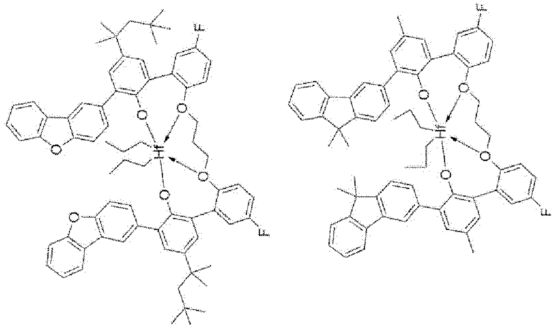 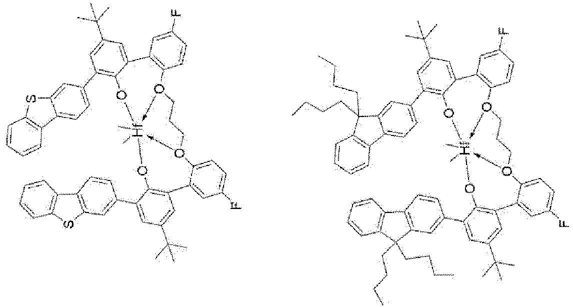 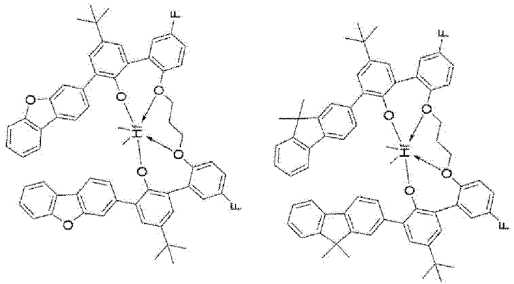 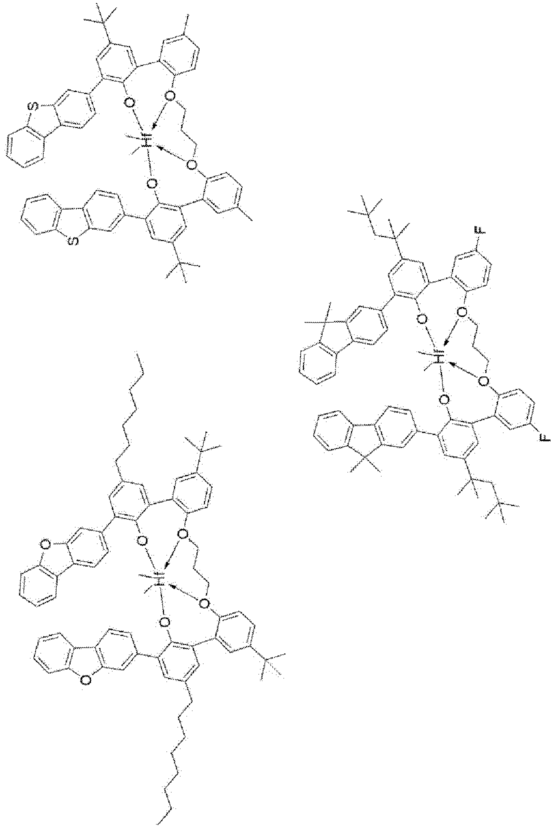 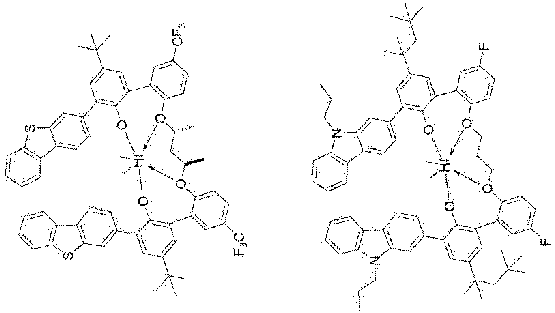 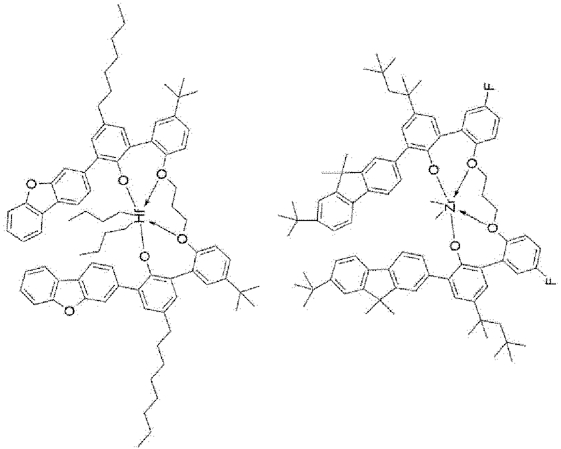 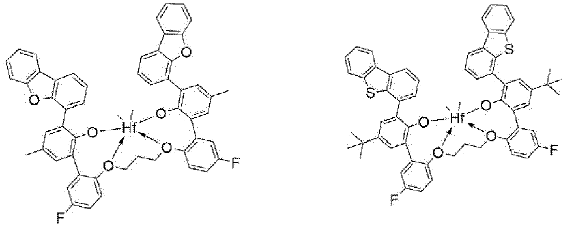 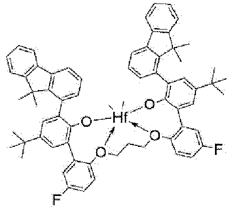 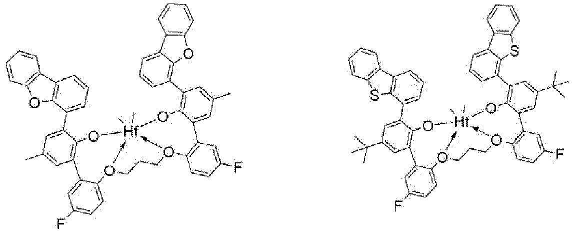 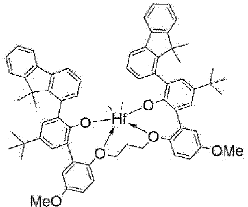 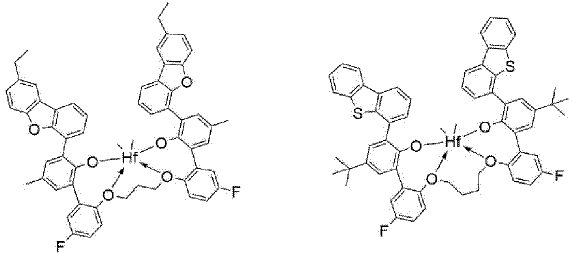 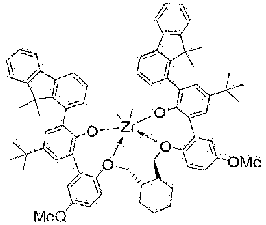 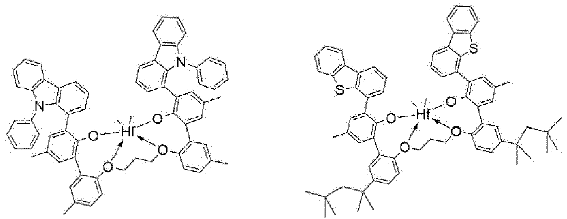 .

The catalyst composition of the present invention is characterized in including the transition metal compound represented by Formula 1 and a cocatalyst.

In the present invention, a "composition" includes a mixture of materials including the composition as well as a reaction product and a decomposition product obtained from the materials of the composition.

In addition, the catalyst composition of the present invention may further include a cocatalyst.

The cocatalyst may use a known one in this technical field, for example, one or more selected from the group consisting of Formula 4 to Formula 6 may be used as the cocatalyst.

[Formula 4] -[Al(Rₐ)-O]ₘ-

[Formula 5] D(Rₐ)₃

[Formula 6] [L-H]⁺[Z(A)₄]⁻ or [L]⁺ [Z(A)₄]⁻

In the above Formulas,
each Rₐ is independently a halogen radical, a hydrocarbyl radical of 1 to 20 carbon atoms, or a halogen-substituted hydrocarbyl radical of 1 to 20 carbon atoms,
m is an integer of 2 or more,
D is aluminum or boron,
L is a neutral or cationic Lewis acid,
Z is an element in group 13,
each A is independently an aryl group of 6 to 20 carbon atoms, wherein one or more hydrogen atoms can be substituted with substituents, or an alkyl group of 1 to 20 carbon atoms, and
the substituent of A is a halogen group, a hydrocarbyl group of 1 to 20 carbon atoms, an alkoxy group of 1 to 20 carbon atoms, or an aryloxy group of 6 to 20 carbon atoms.

The compound represented by Formula 4 is not specifically limited as long as it is alkylaluminoxane. Preferable examples may include methylaluminoxane, ethylaluminoxane, isobutylaluminoxane, butylaluminoxane, etc., particularly preferably, methylaluminoxane.

The compound represented by Formula 5 is not specifically limited, and preferable examples thereof may include trimethylaluminum, triethylaluminum, triisobutylaluminum, tripropylaluminum, tributylaluminum, dimethylchloroaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, tributylboron, etc., and particularly preferably, be selected from trimethylaluminum, triethylaluminum, and triisobutylaluminum.

Examples of the compound represented by Formula 6, if Z is boron, may include, for example, dioctadecylmethylammonium tetrakis(pentafluorophenyl)borate [(C₁₈H₃₇)₂N(H)Me]⁺[B(C₆F₅)₄]⁻, dioctadecylmethylammonium, tetrakis(phenyl)borate, dioctadecylmethylammonium tetrakis[3,5-bis(trifluoromethyl)phenyl]borate, triethylammonium tetraphenylborate, tributylammonium tetraphenylborate, trimethylammonium tetraphenylborate, tripropylammonium tetraphenylborate, trimethylammonium tetra(p-tolyl)borate, trimethylammonium tetra(o,p-dimethylphenyl) borate, tributylammonium tetra(p-trifluoromethylphenyl)borate, trimethylammonium tetra(p-trifluoromethylphenyl)borate, tributylammonium tetrapentafluorophenylborate, N,N-diethylanilidium tetraphenylborate, N,N-diethylanilinium tetrapentafluorophenylborate, diethylammonium tetrapentafluorophenylborate, triphenylphosphonium tetraphenylborate, trimethylphosphonium tetraphenylborate, tripropylammonium tetra(p-tolyl)borate, triethylammonium tetra(o,p-dimethylphenyl)borate, trimethylammonium tetra(o,p-dimethylphenyl) borate, triphenylcarbonium tetra(p-trifluoromethylphenyl)borate, triphenylcarbonium tetrapentafluorophenylborate, or combinations thereof, if Z is aluminum, for example, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra (o,p-dimethylphenyl) aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, triethylammonium tetraphenylaluminum, tributylammonium tetraphenylaluminum, or combinations thereof, without limitation.

Particularly, the cocatalyst used in the present invention may be the compound represented by Formula 6, particularly, dioctadecylmethylammonium tetrakis(pentafluorophenyl)borate.

In addition, the transition metal compound represented by Formula 1 and the cocatalyst may be used in a supported type by a support. Silica or alumina may be used as the support, without limitation.

The method for preparing an olefin polymer of the present invention is characterized in including a step of polymerizing an olefin monomer in the presence of the catalyst composition.

In the present invention, the "polymer" refers to a polymer compound prepared by polymerizing monomers of the same or different type. Like this, a general term of polymer includes the term of homopolymer used for referring to a polymer prepared from only one type of a monomer and the term of interpolymer specified as follows.

In the present invention, the term "interpolymer" refers to a polymer prepared by polymerizing at least two different type of monomers. Like this, a general term of interpolymer refers to a polymer prepared from two different type of monomers, and includes a commonly used copolymer and a polymer prepared from two or more different type of monomers.

In the present invention, the olefin monomer may be one or more selected from the group consisting of ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene and 1-eicosene, without limitation.

Particularly, the olefin polymer of the present invention may be an olefin homopolymer, or an olefin-alpha-olefin copolymer according to the type of the olefin monomer, and preferably, may be an ethylene/alpha-olefin copolymer. In this case, the content of the alpha-olefin monomer, which is a comonomer, may be suitably selected according to the use, purpose, etc., of the olefin polymer by a person skilled in the art, and may be about 1 to 99 mol%.

The catalyst composition may be injected after being dissolved or diluted in an aliphatic hydrocarbon solvent of 5 to 12 carbon atoms, such as pentane, hexane, heptane, nonane, decane, isomers thereof, an aromatic hydrocarbon solvent such as toluene and benzene, or a hydrocarbon solvent substituted with a chlorine atom, such as dichloromethane and chlorobenzene, which are suitable for an olefin polymerization process. The solvent used herein may preferably be used after removing a small amount of water or air, which functions as a catalyst poison, by treating with a small amount of alkylaluminum, and may be treated by further using a cocatalyst.

The most preferable preparation process using the catalyst composition is a solution process, and if the composition is used together with an inorganic support such as silica, it may also be applied to a slurry process or a gas phase process.

The polymerization may be performed by homopolymerizing one type of olefin monomer or copolymerizing two or more olefin monomers by using one of a continuous slurry polymerization reactor, a loop slurry reactor, a gas phase reactor, or a solution reactor.

In addition, to remove moisture in the reactor during performing polymerization reaction, an organoaluminum compound may be further injected, and the polymerization reaction may be performed in the presence thereof. Particular examples of such organoaluminum compound may include trialkylaluminum, dialkylaluminum halide, alkylaluminum dihalide, aluminum dialkyl hydride or alkyl aluminum sesquihalide, and more particular examples thereof may include Al(C₂H₅)₃, Al(C₂H₅)₂H, Al(C₃H₇)₃, Al(C₃H₇)₂H, Al (i-C₄H₉)₂H, Al(C₈H₁₇)₃, Al(C₁₂H₂₅)₃, Al(C₂H₅)(C₁₂H₂₅)₂, Al (i-C₄H₉)(C₁₂H₂₅)₂, Al(i-C₄H₉)₂H, Al(i-C₄H₉)₃, (C₂H₅)₂AlCl, (i-C₃H₉)₂AlCl or (C₂H₅)₃Al₂Cl₃. Such an organoaluminum compound may be continuously injected to the reactor, or may be injected in a ratio of about 0.1 to 10 mol per 1 kg of a reaction medium which is injected to the reactor for suitable removal of moisture.

According to an embodiment of the present invention, the polymerization of the olefin polymer may be performed under a temperature of about 80 to 200°C, particularly, a temperature of about 90 to 200°C, or a temperature of about 130 to 200°C, and a pressure of about 20 to 100 bar, particularly, a pressure of about 20 to 50 bar, or pressure conditions of about 20 to 40 bar, for about 8 minutes to 2 hours.

### Examples

Hereinafter, the present invention will be explained in more detail referring to the Examples. However, the Examples are for illustrating the present invention, and the scope of the present invention is not limited thereto.

### <Preparation of Transition Metal Compound>

### Preparation Example 1

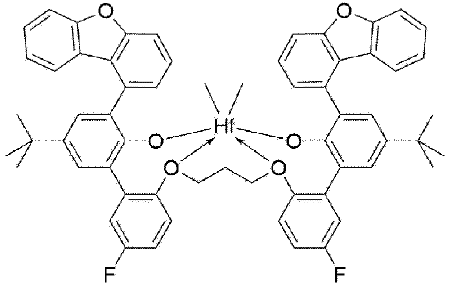

The compound was prepared according to the scheme below.

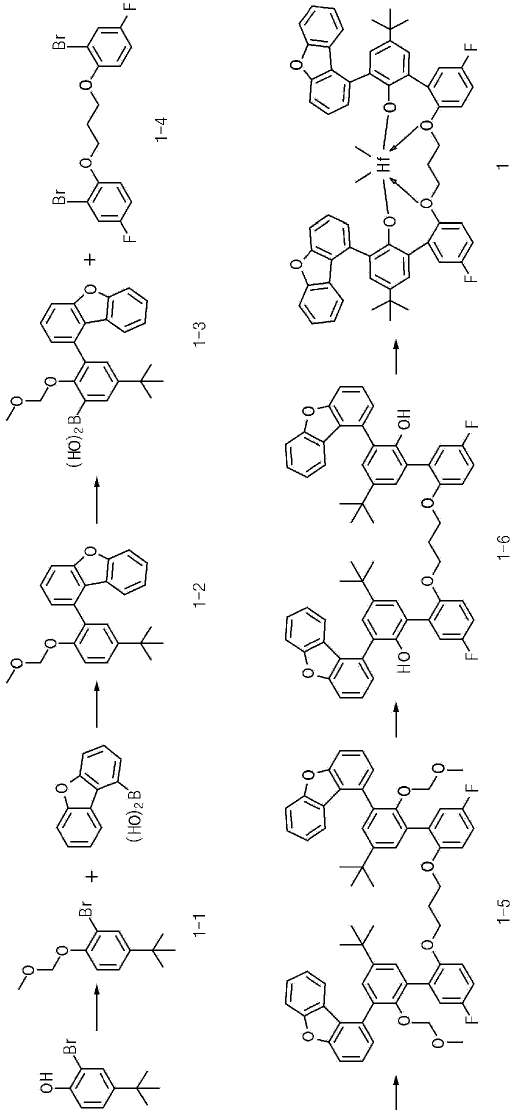

### (1) Preparation of Compound 1-1

2-Bromo-4-(tert-butyl)phenol (15.0 g, 65.5 mmol) was dissolved in 100 mL of N,N-dimethylformamide and cooled to 0°C or less using an ice-bath. NaH (2.9 g, 72 mmol) was slowly injected thereto, and the temperature was elevated to room temperature. After stirring at room temperature for 30 minutes, the temperature was reduced to 0°C again, and chloro(methoxy)methane (5.80 g, 72 mmol) was injected thereto. The temperature was elevated to room temperature, and stirring was performed for 3 hours. After finishing the reaction, 500 mL of water was injected, and extraction with ethyl acetate was performed. A separated organic layer was washed with 300 mL of water twice, separated and slurried using anhydrous magnesium sulfate. After filtering, the resultant was concentrated under a reduced pressure to prepare Compound 1-1 in an oil type (17 g, yield 95%).

### (2) Preparation of Compound 1-2

Compound 1-1 (7.0 g, 25.6 mmol) and dibenzo[b,d]furan-1-ylboronic acid (5.7 g, 26.9 mmol) were dissolved in 85 mL of tetrahydrofuran, and 30 mL of an aqueous solution of potassium carbonate (10.6 g, 77 mmol) was injected thereto, followed by heating. To the mixture thus obtained in a refluxing state, tetrakis-(triphenylphosphine)palladium (0.15 g, 0.13 mmol) was injected, followed by refluxing and stirring for 12 hours. After finishing the reaction, the temperature was reduced to room temperature, tetrahydrofuran was removed by concentrating under a reduced pressure. The mixture thus obtained was dissolved by injecting ethyl acetate and the resultant was washed with water twice. An organic layer was separated and treated with anhydrous magnesium sulfate. After filtering, the organic layer was concentrated under a reduced pressure. The resultant was slurried using a small amount of tert-butyl methyl ether and an excessive amount of hexane, stirred at room temperature for 2 hours and filtered to prepare Target Compound 1-2 of dark gray color (9.0 g, yield 97%).

### (3) Preparation of Compound 1-3

Compound 1-2 (6.63 g, 18.4 mmol) was dissolved in 40 mL of anhydrous tetrahydrofuran and cooled to -20°C. n-Butyllithium was slowly injected thereto. The temperature was elevated to room temperature, stirring was performed for 2 hours, and triisopropylborate (4.7 mL, 20.2 mmol) was injected thereto. After stirring at room temperature for about 1 hour, and after finishing the reaction, 50 mL of 1 N HCl aqueous solution was injected and stirred. The resultant was extracted with ethyl acetate, an organic layer was separated, and the organic layer was washed with water once more, separated and treated with anhydrous magnesium sulfate. After filtering, the organic layer was concentrated under a reduced pressure. Target Compound 1-3 was prepared in a mixture type of a yellow foam and oil (6.3 g, 84.7%).

### (4) Preparation of Compound 1-4

A compound of 2-bromo-4-fluorophenol (10.0 g, 52.4 mmol) and 1,3-dibromopropane (5.3 g, 26.2 mmol) were dissolved in 150 mL of acetone, and potassium carbonate (21.7 g, 157 mmol) was injected thereto, followed by heating. After stirring for 12 hours in a refluxing state, the resultant was cooled to room temperature and filtered. A filtrate was concentrated under a reduced pressure, and the concentrated compound was dissolved in ethyl acetate again and washed with water twice. An organic layer was separated and slurried using anhydrous magnesium sulfate. After filtering, the organic layer was concentrated under a reduced pressure. To the concentrated compound, a small amount of hexane was added and made into a slurry, and filtering was performed to obtain Compound 1-4 as a white solid (8.3 g, yield 75.1%).

### (5) Preparation of Compound 1-5

Compound 1-3 (6.3 g, 15.6 mmol) and Compound 1-4 (3.0 g, 7.1 mmol) were diluted in 50 mL of 1,4-dioxane, and 20 mL of an aqueous potassium carbonate solution (3.9 g, 28.4 mmol) was injected thereto. The mixture was heated, and in a refluxing state, tetrakis-(triphenylphosphine)palladium (0.16 g, 0.14 mmol) was injected, followed by refluxing and stirring for 12 hours. After finishing the reaction, the temperature was reduced to room temperature, ethyl acetate was injected thereto, washing with water was performed twice, and an organic layer was separated and treated with anhydrous magnesium sulfate. After filtering, the organic layer was concentrated under a reduced pressure. The concentrated compound was separated by column through silica column chromatography to prepare Target Compound 1-5 in a white solid state (2.0 g, yield 28.7%).

### (6) Preparation of Compound 1-6

Compound 1-5 (2.0 g, 2.04 mmol) was injected to methanol, and while stirring, 0.5 mL of concentrated hydrochloric acid was injected thereto, followed by heating. After stirring while refluxing for 12 hours or more, the temperature was reduced to room temperature, the pH was adjusted to 7-8 using a saturated sodium bicarbonate aqueous solution, and extraction was performed using ethyl acetate. The extracted organic layer was additionally washed with water once and slurried using anhydrous magnesium sulfate. After filtering, the organic layer was concentrated under a reduced pressure. The resultant was separated through column chromatography using a mixture solution of hexane and ethyl acetate in 5/1 to prepare Target Compound 1-6 (1.13 g, yield 62%).

### (7) Preparation of Compound 1

In a glove box, Compound 1-6 (1.0 g, 1.1 mmol) and hafnium tetrachloride (0.36 g, 1.1 mmol) were diluted in 25 mL of toluene, and a 3.0 M solution of methyl magnesium bromide (1.5 mL, 4.5 mmol) was slowly injected. After stirring for 12 hours, 10 mL of hexane was injected to the mixture, stirring was performed for about 3 hours, and filtering was performed through a celite pad. The filtrate was concentrated under a reduced pressure, and 20 mL of a solution of toluene and hexane in 1/1 was injected to the concentrate and slurried for 3 hours. After filtering, the filtrate was concentrated under a reduced pressure to prepare Compound 1 as a white solid (0.9 g, yield 73%).

¹H NMR (500MHz, C₆D₆) : 8.33 (d,2H), 8.08 (s, 4H), 7.37(d,2H), 7.05(d,2H), 7.58-7.49(m,4H), 7.35-7.25(m,4H), 7.19-7.05(m, 6H), 4.50-4.38(m,4H), 3.67-3.40(m,2H), 1.52(s,9H), 1.38(s,9H), 0.91 (s, 6H)

### Preparation Example 2

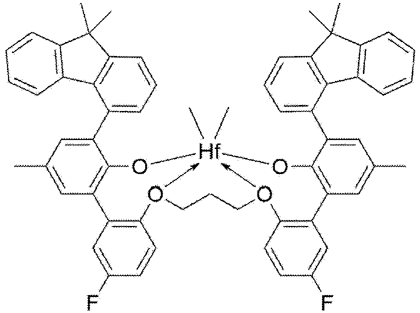

The compound was prepared according to the scheme below.

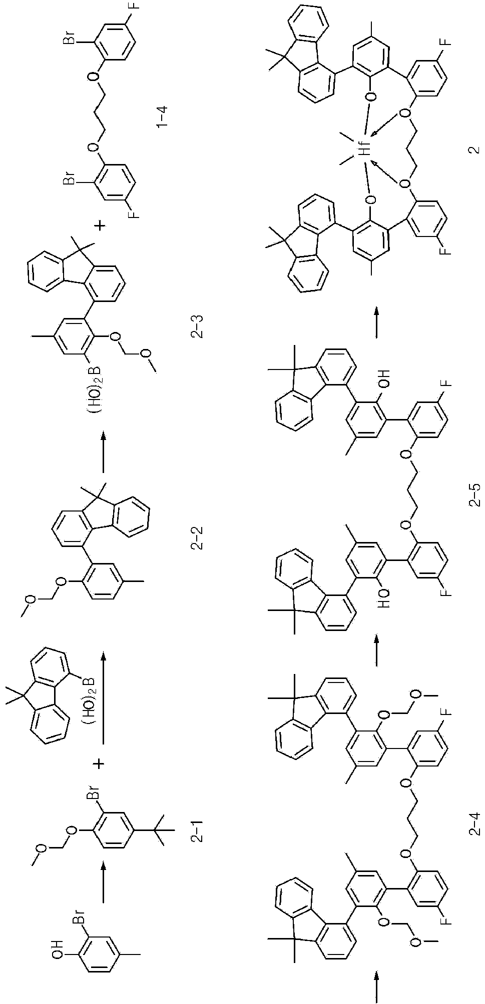

### (1) Preparation of Compound 2-1

Target Compound 2-1 was prepared by performing the same manner as in the Preparation Example of Compound 1-1 using 2-bromo-4-methylphenol (5.0 g, 26.7 mmol) (6.1 g, yield 98.7%).

### (2) Preparation of Compound 2-2

Target Compound 2-2 in a yellow oil type was prepared by performing the same manner as in the Preparation Example of Compound 1-2 using Compound 2-1 (10 g, 43.3 mmol) and (9,9-dimethyl-9H-fluoren-4-yl)boronic acid (10.8 g, 45.4 mmol) (14.5 g, yield 97.3%).

### (3) Preparation of Compound 2-3

Compound 2-3 was prepared by performing the same manner as in the Preparation Example of Compound 1-3 using Compound 2-2 (15.5 g, 48.8 mmol), and Compound 2-3 of a white solid was prepared by separating through column chromatography using a mixture solvent of hexane and ethyl acetate in 10/1 (9.6 g, yield 50.6%).

### (4) Preparation of Compound 2-4

Compound 2-4 was prepared by performing the same manner as in the Preparation Example of Compound 1-5 using Compound 2-3 (4.6 g, 11.9 mmol) and Compound 1-4 (2.0 g, 4.7 mmol), and Compound 2-4 of a white solid was prepared by separating through column chromatography using a mixture solvent of hexane and ethyl acetate in 20/1 (3.02 g, yield 66.7%).

### (5) Preparation of Compound 2-5

Target Compound 2-5 of light yellow color was prepared by performing the same manner as in the Preparation Example of Compound 1-6 using Compound 2-4 (3.0 g, 3.16 mmol) (1.1 g, yield 36.7%).

### (6) Preparation of Compound 2

In a glove box, Compound 2-4 (1.16 g, 1.3 mmol) and hafnium tetrachloride (0.43 g, 1.35 mmol) were diluted in 30 ml of toluene, and a 3.0 M solution of methyl magnesium bromide (1.8 ml, 5.4 mmol) was slowly injected thereto. After stirring for 12 hours, 10 mL of hexane was injected to the mixture, stirring was performed for about 3 hours, and filtering was performed through a celite pad. The filtrate was concentrated under a reduced pressure, and 20 mL of a solution of toluene and hexane in 1/1 was injected to the concentrate and slurried for 3 hours. After filtering, the filtrate was concentrated under a reduced pressure to prepare Compound 2 of a white solid (1.35 g, yield 91%).

¹H NMR (500MHz, CDCl₃) : 7.75-7.83(d,1H), 7.54-6.93(m,21H), 6.58(m,1H), 6.41 (m,1H), 5.52(m,1H), 5.08(m,1H), 3.99-3.92(m, 1H), 3.69-3.52(m,2H), 3.31-3.23(m,1H), 2.35(m,6H), 2.27(m,3H), 1.61(m,6H), 1.44(t,3H), 1.26(s,3H), -0.80 (s, 6H)

### Preparation Example 3

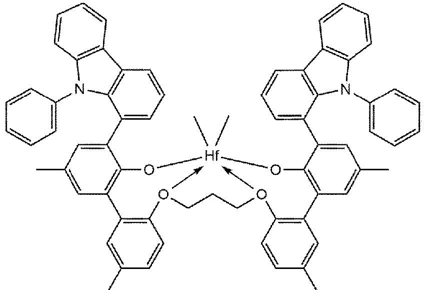

The compound was prepared according to the scheme below.

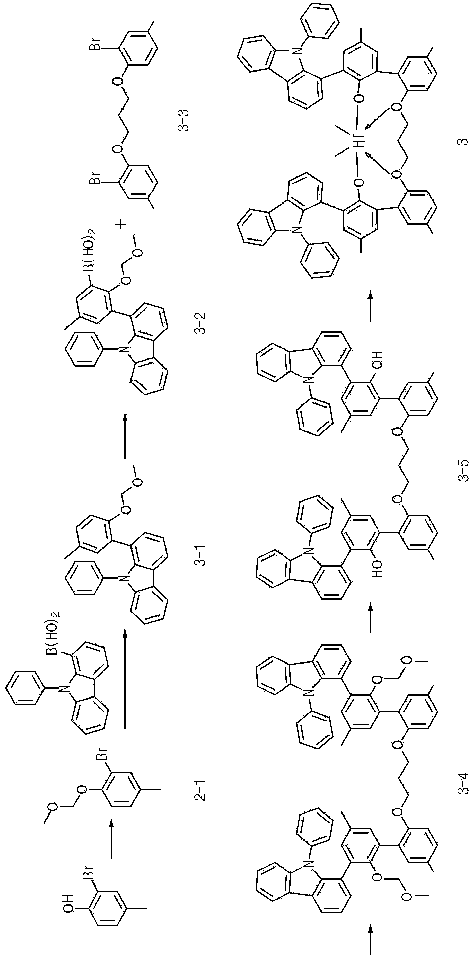

### (1) Preparation of Compound 3-1

Target Compound 3-1 in a white solid state was prepared by performing the same manner as in the Preparation Example of Compound 1-2 using Compound 2-1 (5 g, 21.6 mmol) and (9-phenyl-9H-carbazol-1-yl)boronic acid (6.5 g, 22.7 mmol) (6.21 g, yield 73%).

### (2) Preparation of Compound 3-2

Target Compound 3-2 of a white solid was prepared by performing the same manner as in the Preparation Example of Compound 1-3 using Compound 3-1 (3.5 g, 8.9 mmol) (2.52 g, yield 65%).

### (3) Preparation of Compound 3-3

Compound 3-3 of a white solid was prepared by performing the same manner as in the Preparation Example of Compound 1-4 using 2-bromo-4-methylphenol (6.0 g, 32.1 mmol) (5.84 g, yield 88%).

### (4) Preparation of Compound 3-4

Target Compound 3-4 of light gray color was prepared by performing the same manner as in the Preparation Example of Compound 1-5 using Compound 3-2 (5.0 g, 11.4 mmol) and Compound 3-3 (2.13 g, 5.15 mmol) (4.01 g, yield 75%).

### (5) Preparation of Compound 3-5

Target Compound 3-5 of white color was prepared by performing the same manner as in the Preparation Example of Compound 1-6 using Compound 3-4 (5.0 g, 4.81 mmol) (3.52 g, yield 77%).

### (6) Preparation of Compound 3

Target Compound 3 of white color was prepared by performing the same manner as in the Preparation Example of Compound 1 using Compound 3-5 (1.10 g, 1.16 mmol) in a glove box (0.45 g, yield 49%).

¹H NMR (500MHz, C₆D₆): 8.65(d,1H), 8.55(d,1H), 8.42(d,1H), 8.29(d,1H), 8.19(d,1H), 8.06(d,1H), 7.94(d,1H), 7.78(s,2H), 7.71(s,4H), 7.62-7.50(m,12H), 7.48-7.20(m,5H), 7.16(t,2H), 7.10(d,2H), 3.92(t,4H), 2.46(s, 6H), 2.36(s,6H), 2.13(m,2H),0.9(s,6H).

### Preparation Example 4

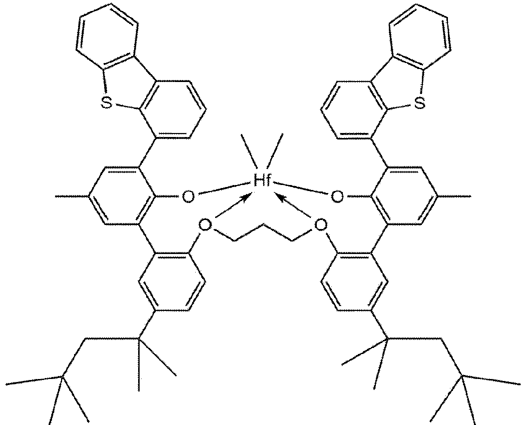

The compound was prepared according to the scheme below.

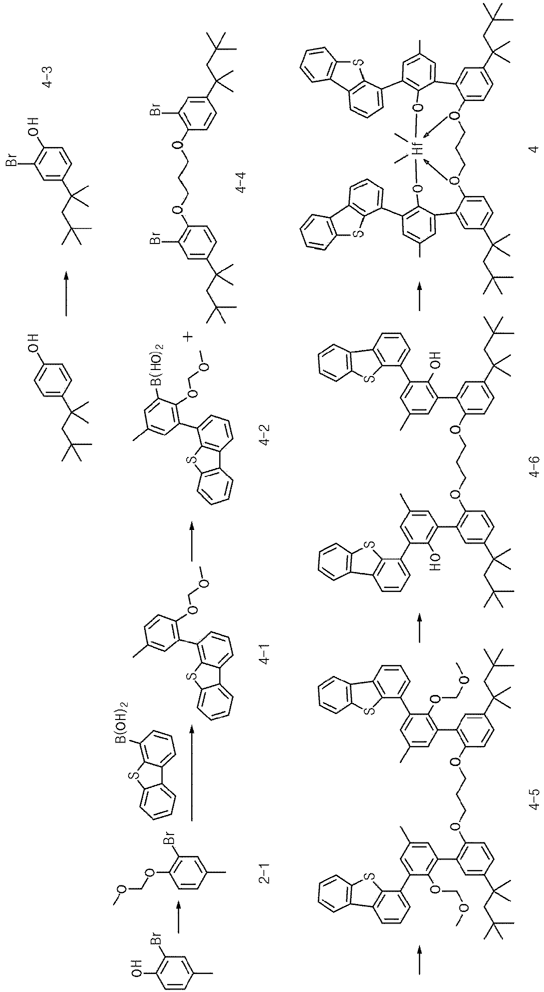

### (1) Preparation of Compound 4-1

Target Compound 4-1 was prepared by performing the same manner as in the Preparation Example of Compound 1-2 using Compound 2-1 (5.0 g, 21.6 mmol) and dibenzo[b,d]thiophen-4-ylboronic acid (5.18 g, 22.7 mmol) (5.28 g, yield 73%).

### (2) Preparation of Compound 4-2

Target Compound 4-2 was prepared by performing the same manner as in the Preparation Example of Compound 1-3 using Compound 4-1 (5.0 g, 15.0 mmol) (3.84 g, yield 68%).

### (3) Preparation of Compound 4-3

4-(2,4,4-Trimethylpentan-2-yl)phenol (10.0 g, 48.5 mmol) was dissolved in 50 mL of N,N-dimethylformamide and cooled to 0°C. N-Bromosuccinimide (8.63 g, 48.5 mmol) was injected thereto and stirred at the same temperature for 1 hour. After that, the reaction mixture was injected to 500 mL of water. The resultant was extracted with a dichloromethane solvent, an organic layer was separated, and the organic layer was additionally washed with 500 mL of water once more. The organic layer separated was slurried using anhydrous magnesium sulfate and stirred. After filtering, the filtrate was concentrated under a reduced pressure. The concentrate in an oil state was slurried using ethyl acetate and hexane and filtered to prepare Target Compound 4-3 of a white solid (11.2 g, yield 81%).

### (4) Preparation of Compound 4-4

Target Compound 4-4 was prepared by performing the same manner as in the Preparation Example of Compound 1-4 using Compound 4-3 (8.0 g, 28.1 mmol) and 1,3-dibromopropane (2.83 g, 14.0 mmol) (6.5 g, yield 76%).

### (5) Preparation of Compound 4-5

Target Compound 4-5 of a white solid was prepared by performing the same manner as in the Preparation Example of Compound 1-5 using Compound 4-2 (5.3 g, 14.0 mmol) and Compound 4-4 (4.3 g, 7.1 mmol) (6.0 g, yield 77%).

### (6) Preparation of Compound 4-6

Target Compound 4-6 was prepared by performing the same manner as in the Preparation Example of Compound 1-6 using Compound 4-5 (4.5 g, 4.0 mmol) (3.8 g, yield 91%).

### (7) Preparation of Compound 4

Target Compound 4 of a white solid was prepared by performing the same manner as in the Preparation Example of Compound 1 using Compound 4-6 (0.78 g, 0.76 mmol) in a glove box (0.61 g, yield 65%).

¹H NMR (500 MHz, CDCl₃): 8.63 (d,2H), 8.42 (d,2H), 8.34(d,2H), 7.97(d,2H), 7.83(s,2H), 7.70(s,4H), 7.66(s,2H), 7.60(d,2H), 7.51(t,2H), 7.45(t,2H), 7.03(d,2H), 4.05(t,4H), 2.42(s,6H), 2.36(s,6H), 2.13(m,2H), 1.36(s,4H), 0.91(s,30H), 0.89(s,6H) .

### Comparative Preparation Example 1

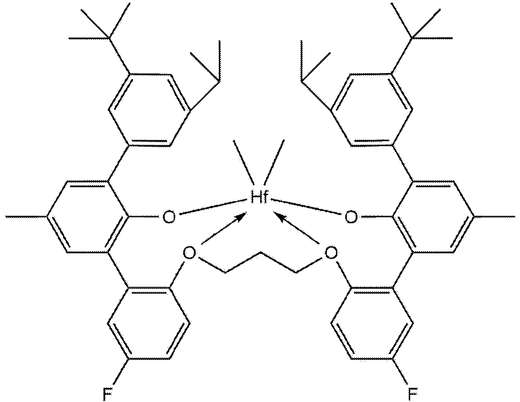

The compound was prepared according to the scheme below.

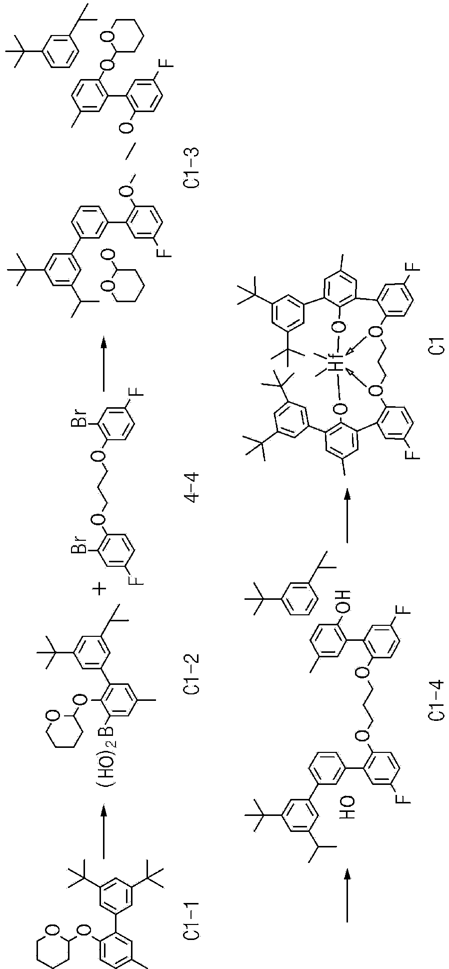

### (1) Preparation of Compound C1-2

Target Compound C1-2 was prepared by performing the same manner as in the Preparation Example of Compound 1-3 using Compound C1-1 (5.0 g, 13.1 mmol) (5.4 g, yield 97%).

### (2) Preparation of Compound C1-3

Target Compound 4-5 of a white solid was prepared by performing the same manner as in the Preparation Example of Compound 1-5 using Compound C1-2 (4.42 g, 10.4 mmol) and Compound 4-4 (2.0 g, 4.7 mmol) (1.2 g, yield 24.8%).

### (3) Preparation of Compound C1-4

Compound C1-3 (5.6 g, 4.7 mmol) was dissolved in 15 mL of a mixture solution of methanol and tetrahydrofuran in 1/1, and p-toluenesulfonic acid (2.0 g, 4.7 mmol) was injected thereto at room temperature, followed by heating to 50°C. After finishing the reaction, the mixture solution was cooled to room temperature, concentrated under a reduced pressure to remove the solvents, diluted again in ethyl acetate and washed with water twice. An organic layer was separated and slurried using anhydrous magnesium sulfate. After filtering, the filtrate was concentrated under a reduced pressure. The concentrated compound was separated through column chromatography using a solvent of hexane and ethyl acetate in 2/1 to prepare Target Compound C1-4 of a white solid (1.2 g, yield 30%).

### (4) Preparation of Compound C1

Target Compound C1 of a white solid was prepared by performing the same manner as in the Preparation Example of Compound 1 using Compound C1-4 (1.0 g, 1.2 mmol) (0.3 g, yield 24.1%).

### Comparative Preparation Example 2

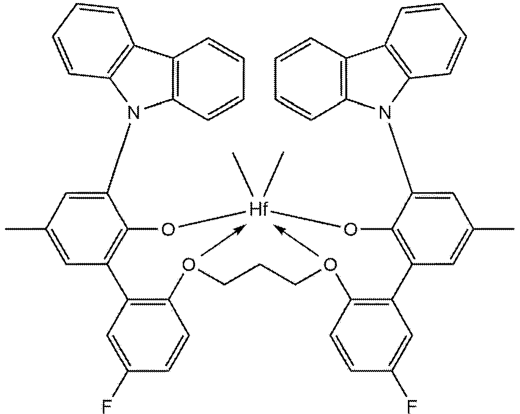

The compound was prepared according to the scheme below.

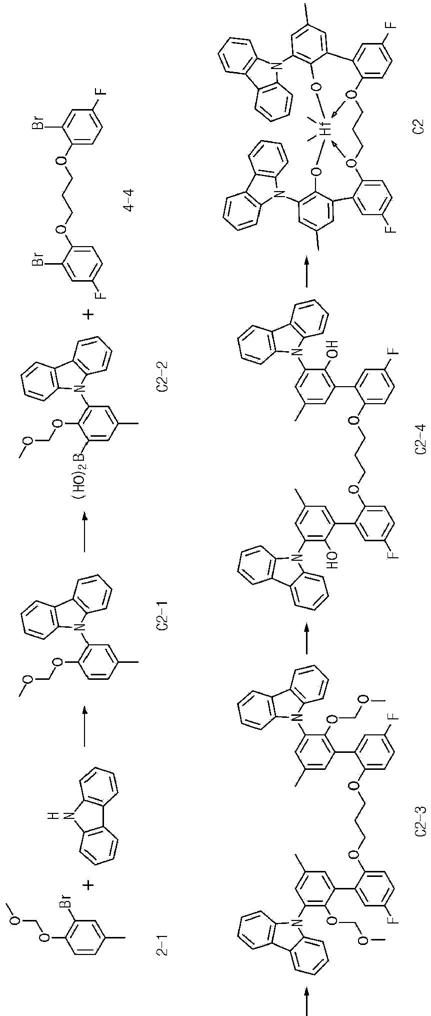

### (1) Preparation of Compound C2-1

Compound 2-1 (5.0 g, 21.6 mmol) and carbazole (3.12 g, 22.7 mmol) were dissolved in 50 mL of toluene, and CuI (4.33 g, 21.6 mmol), 1,10-phenanthroline (0.82 g, 4.54 mmol) and cesium carbonate (14.1 g, 43.2 mmol) were injected thereto, followed by heating, refluxing and stirring. After finishing the reaction, the resultant solution was filtered through a celite pad, and the filtrate was concentrated under a reduced pressure. The mixture thus obtained was slurried using a mixture solvent of hexane and ethyl acetate in 4/1 to prepare Target Compound C2-1 of light red color (4.7 g, yield 68%).

### (2) Preparation of Compound C2-2

Target Compound C2-2 was prepared by performing the same manner as in the Preparation Example of Compound 1-3 using Compound C2-1 (18.7 g, 58.9 mmol) (21 g, yield 99%).

### (3) Preparation of Compound C2-3

Target Compound C2-3 was prepared by performing the same manner as in the Preparation Example of Compound 1-5 using Compound C2-2 (7.53 g, 20.9 mmol) and Compound 4-4 (4.0 g, 9.5 mmol) (7.0 g, yield 82%).

### (4) Preparation of Compound C2-4

Target Compound C2-4 of a white solid was prepared by performing the same manner as in the Preparation Example of Compound 1-6 using Compound C2-3 (1.0 g, 1.1 mmol) (0.8 g, yield 88.7%).

### (5) Preparation of Compound C2

Target Compound C2 of a white solid was prepared by performing the same manner as in the Preparation Example of Compound 1 using Compound C2-4 (1.0 g, 1.2 mmol) (0.9 g, yield 71.6%).

### <Polymerization of Ethylene/Alpha-olefin Copolymer>

### Example 1

To a 2 L autoclave reactor, a hexane solvent (900 mL) and 1-octene (300 mL) were added, and the temperature of the reactor was preheated to 150°C. At the same time, the pressure of the reactor was charged with ethylene (35 bar) in advance. 3 µmol of the catalyst of Preparation Example 1, 30 of µmol of 10 eq of a dimethylanilinium tetrakis(pentafluorophenyl)borate cocatalyst (AB) in contrast to the catalyst, and 0.6 mmol of Tibal as a scavenger were added in order to the reactor by applying an argon pressure of a high pressure, and a copolymerization reaction was carried out for 8 minutes. Then, a remaining ethylene gas was exhausted, and a polymer solution was added to an excessive amount of ethanol to induce precipitation. The precipitated polymer was washed with ethanol twice or three times, and dried in a vacuum oven of 90°C for 12 hours or more.

### Examples 2 to 4, and Comparative Examples 1 and 2

Ethylene/alpha-olefin copolymers were prepared by the same method as Example 1 except for changing the catalyst type as in Table 1.

**[Table 1]**

| | Catalyst mixed |
|---|---|
| Example 1 | Preparation Example 1 |
| Example 2 | Preparation Example 2 |
| Example 3 | Preparation Example 3 |
| Example 4 | Preparation Example 4 |
| Comparative Example 1 | Comparative Preparation Example 1 |
| Comparative Example 2 | Comparative Preparation Example 2 |

### <Analysis of Preparation Results of Ethylene/Alphaolefin Copolymers>

### Experimental Example 1

The physical properties of each of the copolymers prepared in the Examples and Comparative Examples were comparatively analyzed. Measurement conditions and methods are as follows.

### (1) Catalyst Activity (kgPE/mmol)

The polymer obtained was dried in vacuum, the yield was measured, and a value obtained by dividing a polymer (kg) by a catalyst (mmol) was calculated.

### (2) Density

Measurement was conducted according to ASTM D-792.

### (3) Melting Temperature (Tm)

Melting temperature (Tm) can be obtained using a differential scanning calorimeter (DSC 6000) manufactured by PerkinElmer Co. Particularly, with respect to the copolymers, in a nitrogen atmosphere using DSC, the temperature was elevated to 150°C, maintained for 5 minutes, cooled to -100°C, and elevated again, while observing a DSC curve. In this case, the temperature elevation rate and cooling rate were 10°C/min each.

On the DSC curve measured, the melting temperature was set to the maximum point of an endothermic peak during the second temperature elevation.

**[Table 2]**

| | Catalyst activity (kgPE/mmol) | Density (g/mL) | Tm (°C) |
|---|---|---|---|
| Example 1 | 20.5 | 0.885 | 87.8 |
| Example 2 | 23.7 | 0.887 | 88.4 |
| Example 3 | 22.5 | 0.889 | 88.9 |
| Example 4 | 26.8 | 0.881 | 87.3 |
| Comparative Example 1 | 8.4 | 0.882 | 87.4 |
| Comparative Example 2 | 32.4 | 0.859 | 42.9 |

As the results in Table 2, by using the transition metal compound of Formula 1 as a catalyst, a polymer in a high density range with excellent catalyst activity can be prepared compared to the conventional compound of Comparative Example 1, and a polymer in a high density range can be prepared compared to the compound of Comparative Example 2. This shows that polyolefin with a high density can be produced in high productivity by using the transition metal compound represented by Formula 1, developed in the present invention, as a catalyst.

## Claims

1. A transition metal compound represented by the following Formula 1: 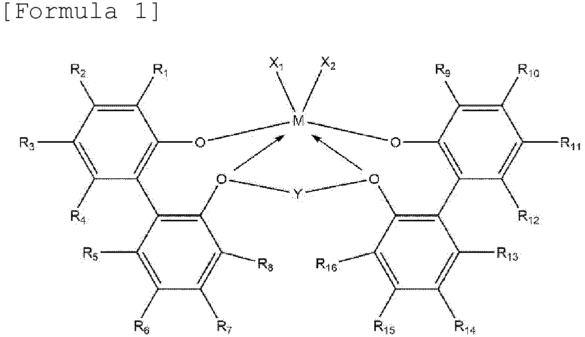 in Formula 1,
M is Ti, Zr or Hf,
R₁ and R₉ are represented by the following Formula 2,
R₂ to R₈, and R₁₀ to R₁₆ are each independently hydrogen, F, Cl, CN, CF₃, an alkyl group of 1 to 20 carbon atoms, an alkylsilyl group of 1 to 20 carbon atoms, or an alkoxy group of 1 to 20 carbon atoms,
Y is an alkylene group of 1 to 20 carbon atoms, an arylene group of 6 to 20 carbon atoms, or a heteroarylene group of 5 to 20 carbon atoms, and
X₁ and X₂ are each independently an alkyl group of 1 to 20 carbon atoms, or an arylalkyl group of 7 to 20 carbon atoms: 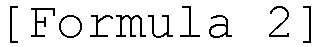 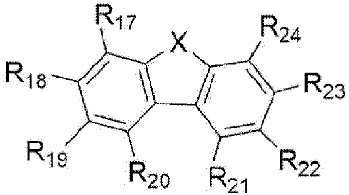
in Formula 2,
R₁₇ to R₂₄ are each independently hydrogen, F, Cl, CN, CF3, an alkyl group of 1 to 20 carbon atoms, an alkylsilyl group of 1 to 20 carbon atoms, or an alkoxy group of 1 to 20 carbon atoms,
X is O, S, C(R₂₅R₂₆) or N(R₂₇), where R₂₅ to R₂₇ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms, or an arylalkyl group of 7 to 20 carbon atoms, and
any one among R₁₇ to R₂₄ is a position connected with Formula **1.**

2. The transition metal compound according to claim **1,** wherein
in Formula 1,
M is Hf,
R₂ to R₈, and R₁₀ to R₁₆ are each independently hydrogen, **F,** or an alkyl group of 1 to 20 carbon atoms,
Y is an alkylene group of 1 to 10 carbon atoms, and
X₁ and X₂ are each independently an alkyl group of 1 to 10 carbon atoms.

3. The transition metal compound according to claim 1, wherein in Formula 2,
R₁₇ to R₂₄ are each independently hydrogen or an alkyl group of 1 to 10 carbon atoms,
R₁₇ or R₂₀ is a position connected with Formula 1,
X is O, S, C(R₂₅R₂₆) or N(R₂₇), where R₂₅ to R₂₇ are each independently an alkyl group of 1 to 10 carbon atoms or an aryl group of 6 to 10 carbon atoms.

4. The transition metal compound according to claim 1, wherein the transition metal compound represented by Formula 1 is one selected from the group consisting of the following Formula 1-1 to Formula 1-4: 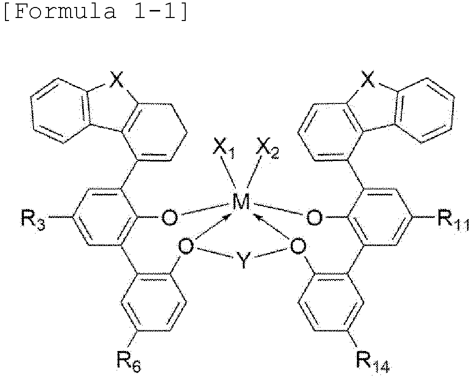 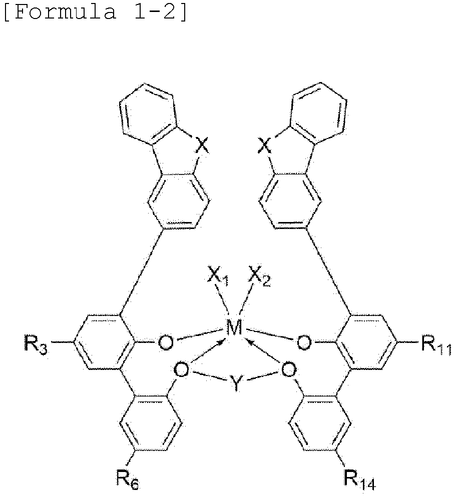 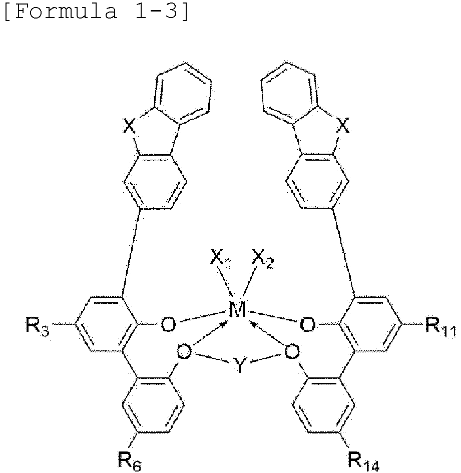 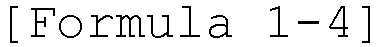 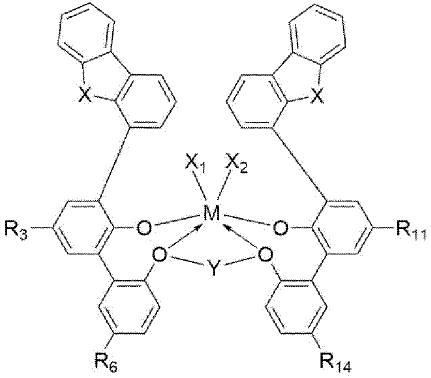 in Formula 1-1 to Formula 1-4,
M is Ti, Zr or Hf,
R₃, R₆, R₁₁ and R₁₄ are each independently F, Cl, CN, CF₃, an alkyl group of 1 to 20 carbon atoms, an alkylsilyl group of 1 to 20 carbon atoms, or an alkoxy group of 1 to 20 carbon atoms,
Y is an alkylene group of 1 to 20 carbon atoms, an arylene group of 6 to 20 carbon atoms, or a heteroarylene group of 5 to 20 carbon atoms,
X₁ and X₂ are each independently an alkyl group of 1 to 20 carbon atoms, or an arylalkyl group of 7 to 20 carbon atoms, and
X is O, S, C(R₂₅R₂₆) or N(R₂₇), where R₂₅ to R₂₇ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms, or an arylalkyl group of 7 to 20 carbon atoms.

5. The transition metal compound according to claim 1, wherein the transition metal compound represented by Formula 1 is one selected from the group consisting of the following compounds:

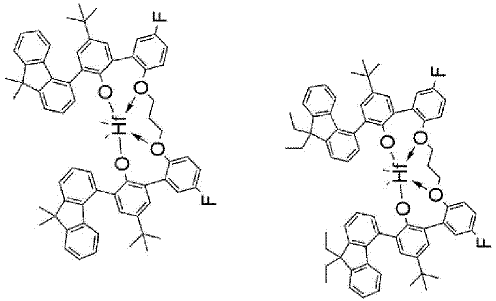

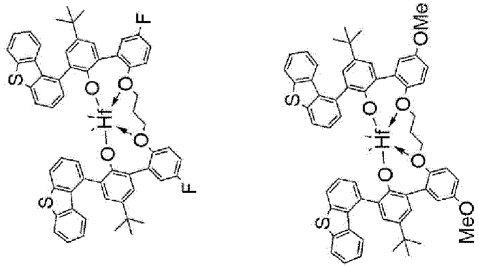

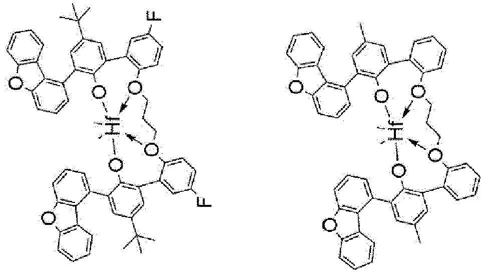

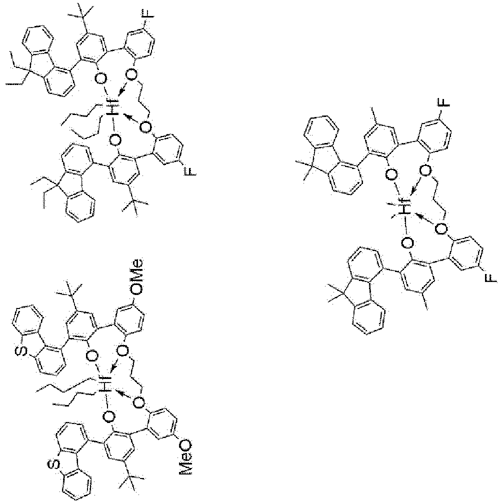

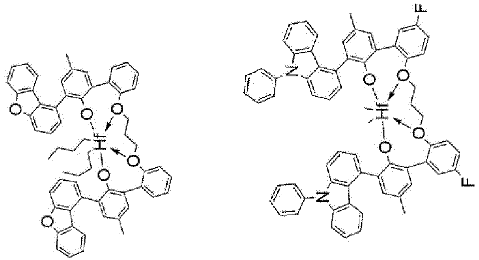

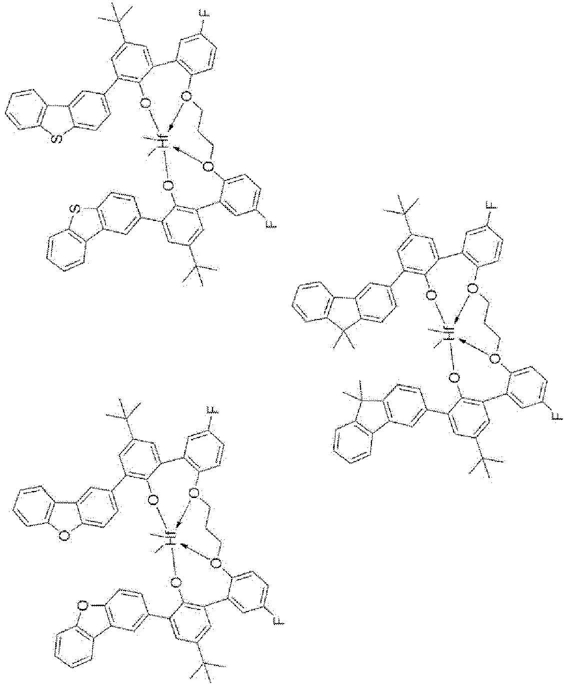

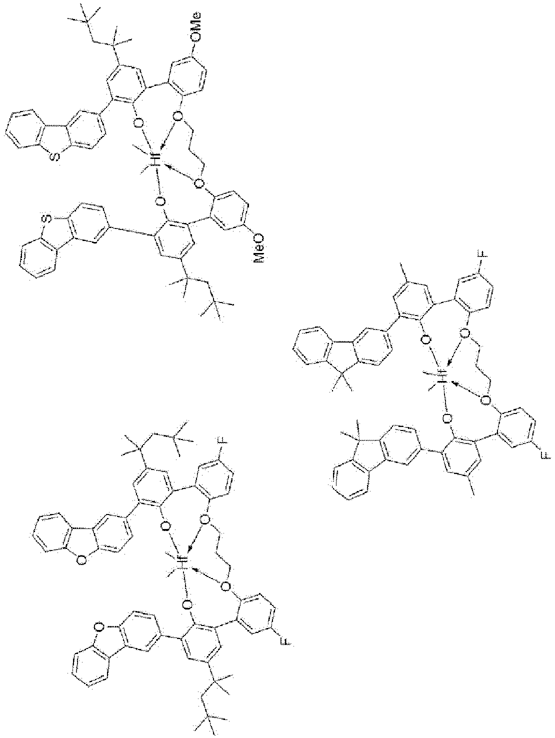

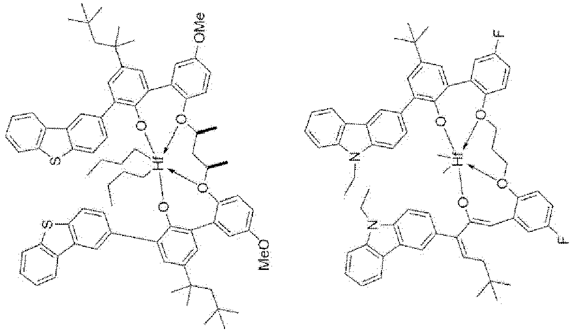

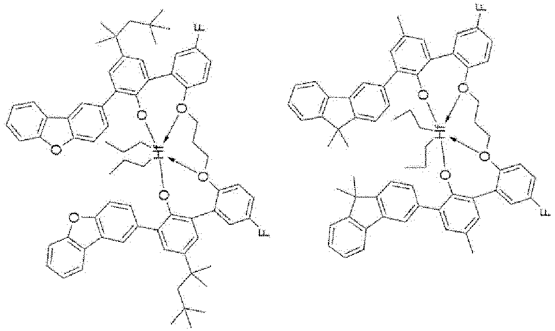

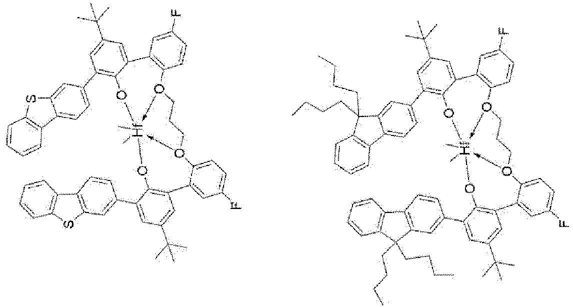

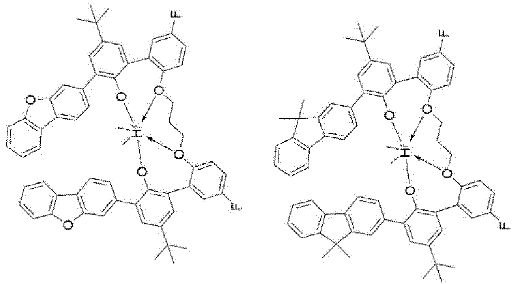

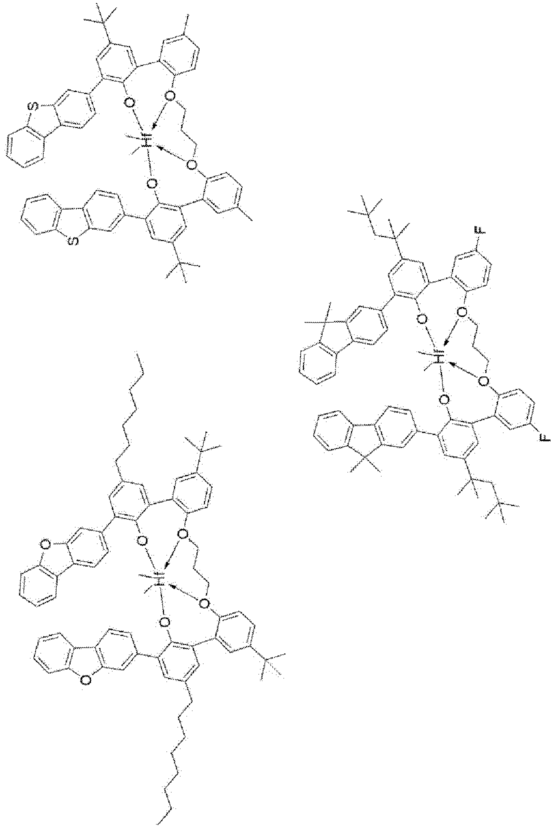

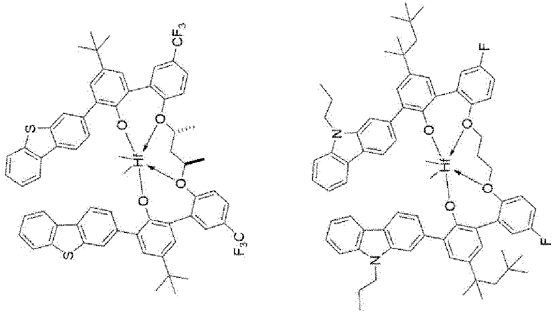

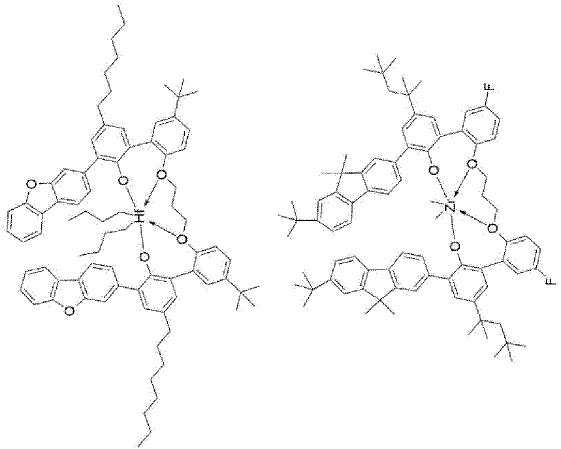

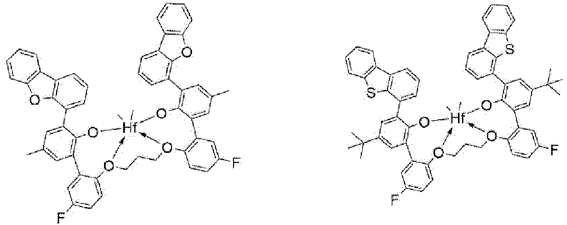

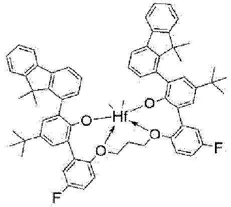

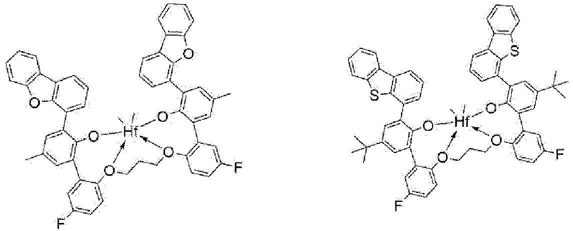

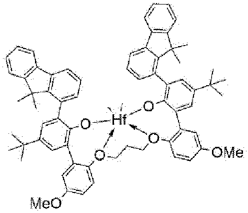

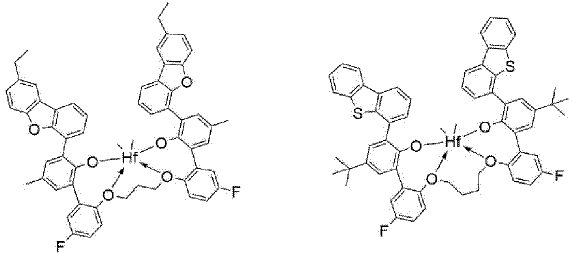

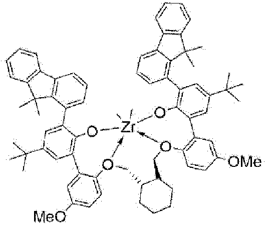

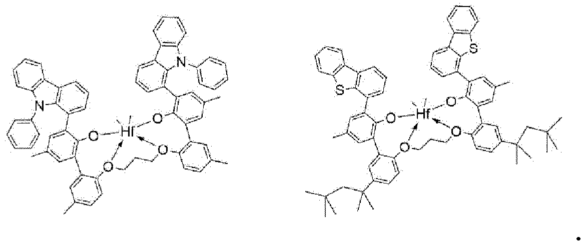

6. A catalyst composition comprising the transition metal compound of claim 1 and a cocatalyst.

7. The catalyst composition according to claim 6, wherein the cocatalyst comprises one or more selected from the group consisting of the following Formula 3 to Formula 5:
[Formula 3] - [Al(Rₐ)-O]ₘ-
[Formula 4] D(Rₐ)₃
[Formula 5] [L-H]⁺[Z(A)₄]⁻ or [L]⁺[Z(A)₄]⁻
in the above Formulas,
each Rₐ is independently a halogen radical, a hydrocarbyl radical of 1 to 20 carbon atoms, or a halogen-substituted hydrocarbyl radical of 1 to 20 carbon atoms,
m is an integer of 2 or more,
D is aluminum or boron,
L is a neutral or cationic Lewis acid,
Z is an element in group 13,
each A is independently aryl of 6 to 20 carbon atoms, in which one or more hydrogen atoms can be substituted with substituents, or alkyl of 1 to 20 carbon atoms, and
the substituent of A is halogen, hydrocarbyl of 1 to 20 carbon atoms, alkoxy of 1 to 20 carbon atoms, or aryloxy of 6 to 20 carbon atoms.

8. A method for preparing an olefin polymer, the method comprising a step of polymerizing an olefin monomer in the presence of the catalyst composition according to claim 6 or 7.

9. The method for preparing an olefin polymer according to claim 8, wherein the olefin polymer is an ethylene/alpha-olefin copolymer.
